# EUROPEAN PATENT APPLICATION

(11) **EP 4 835 666 A1**
(43) Date of publication of application: **04.11.2026**
(21) Application number: 25196280.9
(22) Date of filing: 15.08.2025
(51) Int. Cl.: G06F 9/50

(54) **DYNAMIC LATTICE-BASED EXECUTION FRAMEWORK FOR DISTRIBUTED AI AGENTS**

(30) Priority: 02.05.2025 US 202563798898 P; 06.08.2025 US 202519292861
(71) Applicant: Greenfield Technologies LLC, Wells Tannery PA 16691 (US)
(72) Inventor: BANWELL, Ian Godwin, Wells Tannery, 16691 (US)
(74) Representative: Appleyard Lees IP LLP

(57) **Abstract**

A system and method for orchestrating execution of interdependent decision-making subtasks using a plurality of AI agents. The system receives, from an endpoint device, a task comprising a task context that includes a decision objective and associated data references. An execution graph is generated defining a plurality of subtasks and inter-subtask dependencies. A corresponding AI agent is instantiated for each subtask, with a dynamically scoped task context and constrained data access. Each AI agent executes its assigned subtask based on the scoped context, producing structured outputs. The system then determines target locations within a structured output template for each subtask output using semantic identifiers, positional metadata, and execution graph dependencies. The system inserts the outputs into their mapped locations to synthesize a final decision artifact.

## Description

### CROSS-REFERENCE TO RELATED APPLICATIONS

This application claims the benefit of priority to U.S. Provisional Patent Application No. 63/798,898, filed May 2, 2025, titled "Dynamic Lattice-Based Execution Framework for Distributed AI Agents," the entire contents of which are incorporated herein by reference.

### TECHNOLOGICAL FIELD

Example embodiments of the present disclosure relate to the management of inter-agent coordination, dynamic task adaptation, and real-time dashboard aggregation for monitoring distributed operations across computing devices and networks.

### BACKGROUND

In distributed computing environments, tasks requiring complex decision-making often involve the collaboration of autonomous systems and human subject matter experts (SMEs). Traditional approaches to distributed task execution suffer from rigid pre-programmed workflows, high dependency on static process definitions, and inefficient handling of intermediate task states. Existing systems typically require significant manual intervention at various decision points, resulting in delays, inconsistency, and increased consumption of computing and network resources.

Applicant has identified a number of deficiencies and problems associated with conventional distributed task execution systems. Many of these identified problems have been solved by developing solutions that are included in embodiments of the present disclosure, many examples of which are described in detail herein.

### BRIEF SUMMARY

In one aspect, a system for execution of interdependent decision-making subtasks by a plurality of AI agents is presented. The system comprising: a processor; a non-transitory storage device containing instructions that, when executed by the processor, cause the processor to: receive, from an end-point device over a network, a task comprising a task context, wherein the task context comprises at least a decision objective and associated data references; generate an execution graph for the task, wherein the execution graph defines a plurality of subtasks and inter-subtask dependencies; instantiate the plurality of AI agents, wherein each AI agent is configured to execute at least one subtask of the plurality of subtasks, wherein instantiating further comprises: dynamically generating a scoped task context corresponding to the at least one subtask; and authorizing access relevant data references based on a scoped task context; execute, using the plurality of AI agents, the plurality of subtasks, thereby generating a plurality of subtask outputs; determine, for each subtask output, a corresponding target location within a structured output template associated with the decision objective, based on at least one of semantic identifiers associated with the scoped task context, positional metadata generated during execution of the subtask, and inter-subtask dependencies; and generate a final decision artifact by inserting each subtask output into its corresponding target location within the structured output template.

In some embodiments, the task context further comprises execution constraints, wherein the execution constraints comprise at least one of data access restrictions, subject matter expert (SME) validation requirements, jurisdiction-specific processing rules, or temporal deadlines associated with the decision objective.

In some embodiments, the instructions, when executed, further cause the processor to: validate a completeness of the decision objective and the associated data references; and generate a task identifier linked to the execution graph, scoped task contexts, and agent outputs for traceability across a lifecycle of the task.

In some embodiments, in generating the execution graph, the instructions, when executed, further cause the processor to: identify dependency conditions among subtasks based on at least one of shared data references, a required ordering of operations, or contextual constrains specified in the task context.

In some embodiments, each subtask is associated with metadata comprising at least one of required input types, expected output format, or fallback behavior upon failure or non-availability of a downstream AI agent.

In some embodiments, in generating the execution graph, the instructions, when executed, further cause the processor to: associate each subtask with an AI agent role selected from a predefined registry of AI agent types based on at least the scoped task context corresponding to the at least one subtask.

In some embodiments, the execution graph is dynamically modifiable during runtime in response to at least one of output quality metrics received from an AI agent, SME input indicating a correction or clarification, or detection of unresolved dependencies during task progression.

In some embodiments, in dynamically generating the scoped task context, the instructions, when executed, further cause the processor to: extract, from the task context, data references, execution constraints, and semantic directives relevant to the at least one subtask and its associated downstream dependencies.

In some embodiments, wherein each AI agent is instantiated as a logical node within a distributed execution environment and provisioned with an agent-specific instruction set, a memory buffer for context retention, and access tokens scoped to data references identified in the scoped task context.

In some embodiments, authorizing access to data references comprises enforcing fine-grained access policies using an attribute-based access control (ABAC) model based on subtask identity, agent role, and sensitivity classification of the data.

In some embodiments, in instantiating the plurality of AI agents, the instructions, when executed by the processor, further causes the processor to: select an AI agent type from a configurable registry of AI agent templates, wherein each AI agent template comprises a functional role definition, a tool and model access configurations, and validation protocols for subtask outputs.

In some embodiments, the plurality of AI agents is instantiated in parallel constrained by the inter-subtask dependencies.

In some embodiments, the instructions, when executed by the processor, further causes the processor to: coordinate, via an inter-AI agent messaging layer, the plurality of AI agents to exchange intermediate outputs, control signals, and task state updates.

In some embodiments, in determining the corresponding target location, the instructions, when executed, further cause the processor to: resolve a mapping between the subtask output and a multi-dimensional data coordinate defined by the structured output template, wherein the mapping is computed based on a semantic role associated with the subtask and a hierarchical structure of the output template.

In some embodiments, the structured output template comprises a machine-readable schema defining field-level constraints, and wherein the instructions, when executed, further cause the processor to: validate data type compatibility between each subtask output and corresponding target location; and enforce ordering rules among interdependent fields.

In some embodiments, in generating the final decision artifact, the instructions, when executed, further cause the processor to: determine that all required fields defined by the structured output template have been populated and all inter-field dependency constraints have been satisfied prior to finalization.

In some embodiments, the instructions, when executed, further cause the processor to: transmit the final decision artifact to an SME device for validation; and transmit the final decision artifact to the end-point device or to one or more external systems for downstream consumption.

In some embodiments, in executing the plurality of subtasks using the plurality of AI agents, the instructions, when executed, further cause the processor to: invoke a machine learning model conditioned on the scoped task context and one or more retrieved data values, wherein the machine learning model is configured to generate a structured output conforming to a subtask-specific output specification.

In some embodiments, in executing the plurality of subtasks using the plurality of AI agents, the instructions, when executed, further cause the processor to: invoke a chain-of-thought reasoning protocol comprising multiple sequential inference steps, each conditioned on the output of a prior step and on AI agent memory state.

In some embodiments, in executing the plurality of subtasks using the plurality of AI agents, the instructions, when executed, further cause the processor to: validate input completeness prior to execution by resolving unresolved data references in the scoped task context, and confirming satisfaction of dependency conditions associated with upstream subtasks.

In another aspect, a method for execution of interdependent decision-making subtasks by a plurality of AI agents is presented. The method comprising: receiving, from an end-point device over a network, a task comprising a task context, wherein the task context comprises at least a decision objective and associated data references; generating an execution graph for the task, wherein the execution graph defines a plurality of subtasks and inter-subtask dependencies; instantiating a plurality of AI agents, wherein each AI agent is configured to execute at least one subtask of the plurality of subtasks, wherein instantiating further comprises: dynamically generating a scoped task context corresponding to the at least one subtask; and authorizing access relevant data references based on a scoped task context; executing, using the plurality of AI agents, the plurality of subtasks, thereby generating a plurality of subtask outputs; determining, for each subtask output, a corresponding target location within a structured output template associated with the decision objective, based on at least one of semantic identifiers associated with the scoped task context, positional metadata generated during execution of the subtask, and inter-subtask dependencies; and generating a final decision artifact by inserting each subtask output into its corresponding target location within the structured output template.

In yet another aspect, a computer program product for execution of interdependent decision-making subtasks by a plurality of AI agents is presented. The computer program product comprising a non-transitory computer-readable medium comprising code, which when executed, causes a processor to: receive, from an end-point device over a network, a task comprising a task context, wherein the task context comprises at least a decision objective and associated data references; generate an execution graph for the task, wherein the execution graph defines a plurality of subtasks and inter-subtask dependencies; instantiate a plurality of AI agents, wherein each AI agent is configured to execute at least one subtask of the plurality of subtasks, wherein instantiating further comprises: dynamically generating a scoped task context corresponding to the at least one subtask; and authorizing access relevant data references based on a scoped task context; execute, using the plurality of AI agents, the plurality of subtasks, thereby generating a plurality of subtask outputs; determine, for each subtask output, a corresponding target location within a structured output template associated with the decision objective, based on at least one of semantic identifiers associated with the scoped task context, positional metadata generated during execution of the subtask, and inter-subtask dependencies; and generate a final decision artifact by inserting each subtask output into its corresponding target location within the structured output template.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Having thus described embodiments of the disclosure in general terms, reference will now be made the accompanying drawings. The components illustrated in the figures may or may not be present in certain embodiments described herein. Some embodiments may include fewer (or more) components than those shown in the figures.
Figure 1A illustrates an example system environment for distributed task execution and collaborative decision-making, in accordance with an embodiment of the disclosure;
Figure 1B illustrates an exemplary component-level structure of the system 130, in accordance with an embodiment of the disclosure;
Figure 1C illustrates an exemplary component-level structure that may be used to implement either or both of the end-point device and the SME device(s), in accordance with an embodiment of the disclosure;
Figure 1D illustrates an example system architecture for distributed AI agent-orchestrated task execution with SME validation and final decision generation, in accordance with an embodiment of the disclosure;
Figure 2 illustrates an example method for structuring and executing agentic tasks in a multi-dimensional lattice-based computational topology, in accordance with an embodiment of the disclosure;
Figure 3 illustrates an example method for AI agent-orchestrated workflow for collaborative decision-making, in accordance with an embodiment of the disclosure;
Figure 4 illustrates an example method for multi-agent coordination and self-organization, in accordance with an embodiment of the disclosure;
Figure 5 illustrates an example method for real-time dashboard aggregation from distributed AI agent outputs, in accordance with an embodiment of the disclosure;
Figure 6 illustrates a process flow for orchestrating the execution of interdependent decision-making subtasks by a plurality of AI agents, in accordance with an embodiment of the disclosure.

### DETAILED DESCRIPTION

### Overview

Modern knowledge work processes, particularly in regulated industries such as finance and compliance, involve complex decision-making tasks that require the collection, evaluation, and synthesis of data from heterogeneous sources. Conventional approaches to supporting such workflows rely heavily on manually executed processes, rigid rule-based automation, and fragmented user interfaces, resulting in inefficiencies, error-prone operations, and excessive consumption of computing resources. Conventional systems lack the ability to dynamically coordinate autonomous processing components in real time and do not provide users with transparent, traceable, and dynamically updating views of intermediate and final decision outputs.

Embodiments of the disclosure described herein addresses these deficiencies by introducing an integrated system that orchestrates the collaborative execution of decision workflows across a lattice of dynamically interacting AI agents, SMEs, and structured data repositories. The system employs a rigorous, computerized process wherein (i) task objectives are decomposed into structured execution graphs; (ii) multiple AI agents autonomously execute subtasks, delegate responsibilities, and self-organize based on real-time environmental feedback; and (iii) all intermediate and final outputs are synthesized, validated, and presented through a real-time dashboard aggregation subsystem.

Embodiments of the disclosure reduce reliance on manual processing by enabling AI agents to autonomously coordinate task execution, conflict resolution, and subtask delegation without requiring adherence to predefined, rigid sequences. By allowing agents to dynamically adapt task flows in response to real-time conditions, the system eliminates the need for continuous manual supervision at intermediate stages, thereby improving workflow speed and operational efficiency. For example, in a loan structuring application, AI agents may extract compliance data, evaluate borrower financial health, and synthesize recommended loan structures independently, without requiring manual task dispatch after each processing step. SMEs intervene only at designated checkpoints or when conflict conditions trigger human oversight, thereby significantly reducing human labor at the granular task level.

Embodiments of the disclosure further reduce computing resource consumption by minimizing redundant processing and communication overhead. Through continuous monitoring of task states, AI agents adaptively determine when re-execution, additional data access, or inter-agent communication is necessary, thereby avoiding unnecessary task repetitions and resource utilization. For example, the dashboard aggregation subsystem, as described herein, improves network and processing efficiency by transmitting incremental, role-specific updates to users, rather than broadcasting complete system states or recomputing entire dashboards in response to every event. As a result, the system conserves processing capacity, storage bandwidth, and network resources across the execution lifecycle.

Embodiments of the disclosure optimize resource utilization by dynamically adjusting the number of AI agents, processing nodes, and communication steps engaged for each task instance. AI agents may autonomously determine when to self-delegate subtasks, suspend unnecessary branches of the execution graph, or modify execution pathways in response to environmental feedback. By selectively engaging only the resources necessary to complete the task objective under current conditions, the system minimizes computational waste and enhances operational scalability.

In regulated financial environments, institutions must periodically generate structured regulatory reports conforming to externally mandated templates, such as those defined by the Basel I, II, and III frameworks. These templates consist of high-dimensional data schemas encompassing thousands of interdependent cells, each requiring precise numeric outputs derived from disparate internal data sources, policy logic, and contextual interpretation.

Despite advancements in data infrastructure, current reporting processes remain highly manual, involving task segmentation by operations staff, informal delegation across departments, spreadsheet-based data reconciliation, and human-curated calculations. These human workflows are difficult to scale, error-prone, and brittle in the face of regulatory change.

Embodiments of the disclosure address the technical problem of dynamic, scalable orchestration of context-sensitive data transformation workflows across distributed computing environments, where reporting requirements are externally defined and non-negotiable-in other words, inelastic output demands that cannot be simplified or deferred. The technical difficulty lies not merely in accessing data or performing computations, but in dynamically allocating functional roles across a heterogeneous computing lattice, adaptively managing execution graphs representing interdependent reporting subtasks, enabling machine-agent collaboration under conditions of incomplete or shifting context, and generating audit-traceable, regulator-facing artifacts from fragmented internal systems.

To solve these technical problems, the system instantiates a multi-dimensional lattice of logical nodes, each representing either a computational agent, a human reviewer interface, or a contextual data source. Upon receiving a reporting task (e.g., a specific Basel reporting template and timeframe), the system dynamically generates an execution graph and propagates task context across the lattice. Nodes activate as autonomous AI agents, executing subtasks such as sourcing data, validating figures, deriving required values, or explaining discrepancies. Coordination among agents occurs through a structured inter-agent messaging layer and shared task memory, with fallback paths for human-in-the-loop intervention when ambiguity arises.

Unlike traditional automation systems that require static workflow encoding, this system supports adaptive reconfiguration of the task graph in real time based on intermediate results and SME input. As agents execute and generate outputs, the system aggregates these into structured regulator-ready documents, complete with traceability metadata that maps each output element to its computational lineage, source data, and validation state.

Embodiments of the present disclosure will now be described more fully hereinafter with reference to the accompanying drawings, in which some, but not all, embodiments of the present disclosure are shown. Indeed, the present disclosure may be embodied in many different forms and should not be construed as limited to the embodiments set forth herein; rather, these embodiments are provided so that this disclosure will satisfy applicable legal requirements. Thus, it should be understood that each block of the block diagrams and flowchart illustrations may be implemented in the form of a computer program product; an entirely hardware embodiment; an entirely firmware embodiment; a combination of hardware, computer program products, and/or firmware; and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. **In** some exemplary embodiments, retrieval, loading, and/or execution may be performed in parallel such that multiple instructions are retrieved, loaded, and/or executed together. Thus, such embodiments may produce specifically-configured machines performing the steps or operations specified in the block diagrams and flowchart illustrations. Accordingly, the block diagrams and flowchart illustrations support various combinations of embodiments for performing the specified instructions, operations, or steps.

Where possible, any terms expressed in the singular form herein are meant to also include the plural form and vice versa, unless explicitly stated otherwise. Also, as used herein, the term "a" and/or "an" shall mean "one or more," even though the phrase "one or more" is also used herein. Furthermore, when it is said herein that something is "based on" something else, it may be based on one or more other things as well. **In** other words, unless expressly indicated otherwise, as used herein "based on" means "based at least in part on" or "based at least partially on." Like numbers refer to like elements throughout.

As used herein, a "node" refers to a computational unit within a lattice-based topology, wherein the unit is configured to execute functional operations, exchange data with other nodes, and participate in coordinated workflows. A node may represent one or more of the following: (i) an autonomous software agent instantiated to perform a specific task; (ii) a human interface end-point corresponding to a SME; or (iii) a data repository comprising structured, semi-structured, or unstructured data accessible to other nodes. Each node is logically addressable within the lattice and may be implemented as a discrete process, service, container, virtual machine instance, thread, or software object, depending on system architecture. Each node may be operable to transmit and receive messages, context, or task directives across edges of the lattice structure. Each node may be configured with role-specific metadata governing its capabilities, communication policies, state retention, memory usage, and access to tools or data sources. Nodes may be instantiated dynamically at runtime, statically defined during system initialization, or adapted during execution based on task requirements or environmental conditions. A node may further include logic for local task execution, decision-making, memory storage (transient or persistent), and inter-node coordination. **In** certain embodiments, a node may incorporate or interface with an AI model, rule engine, or human feedback module to carry out its assigned function. Unless otherwise specified, the term "node" may include both abstract logical constructs and their concrete software or hardware realizations.

As used herein, an "entity" refers to a functional actor within the system that is assigned to, represented by, or embodied within a logical node in the lattice structure. An entity is defined by its role, capabilities, and interaction model within the computational framework and may include software-based components, human users, or data services. Entities are categorized based on their operational function, including but not limited to an agent entity, human entity, or a data entity. An agent entity may be an autonomous software component configured to perform a specific task or sequence of tasks, such as data extraction, analysis, content generation, or decision support. Agent entities are typically instantiated from large language models (LLMs) or other AI frameworks and may include domain-specific logic, prompt templates, and access to tools or APIs. Human entities may be an SME or other user who interacts with the system through a defined interface. Human entities may review, validate, override, or provide input to the system and are typically associated with user-specific roles, permissions, and contextual preferences. Data entities may be a data source, content repository, or knowledge base from which information can be retrieved or into which structured outputs may be written. Data entities may include document collections, databases, data lakes, or streaming input sources. Each entity is associated with a logical node, and the system assigns roles to nodes based on the type and function of the entity. In effect, an entity provides the behavioral and semantic identity that governs how a node participates in the lattice-based workflow. Unless otherwise stated, the term "entity" refers to an abstraction of functional capability that is realized through the configuration and execution of a corresponding node.

As used herein, an "AI agent" or "AI model" refers to a software-based autonomous or semi-autonomous functional entity instantiated within a logical node of a lattice-based computational system. Each AI agent is configured to perform one or more domain-specific tasks using artificial intelligence models, including but not limited to transformer-based large language models (LLMs), supervised or reinforcement learning systems, or hybrid rule-based and learning-based components. An AI agent operates by receiving a task specification, prompt, or objective and generating a corresponding output-structured or unstructured-based on the context, system constraints, and available data. AI agents may be equipped with prompt templates, memory buffers, tool integrations, or access to APIs to support their function. AI agents are capable of independently executing tasks, delegating subtasks to other agents, or engaging in coordinated workflows with other nodes through structured communication protocols, such as shared memory, message passing, or central orchestration. AI agents may dynamically adjust their behavior in response to SME input, context updates, or newly available data and may vary in their level of autonomy based on task sensitivity or system policy. AI agents are deployable in a range of computing environments, including containerized microservices, virtual machines, or serverless execution contexts, and may be configured to activate on demand or persist over the lifecycle of a broader workflow. Different types of AI agents may be instantiated for different functional roles, such as content generation, validation, market analysis, or decision support, with each configured to operate within a defined access and control policy.

A used herein, a "user" or an "SME," refers to a human actor who interacts with the system through a logical node configured as a human-machine interface. An SME is typically a domain expert possessing specialized knowledge relevant to a particular task, workflow, or subject area, such as credit analysis, risk assessment, legal review, or market research. The SME interfaces with the system via a graphical user interface, web-based dashboard, or other interaction layer that enables the review, validation, modification, or initiation of system tasks. In the context of the lattice-based architecture, an SME is represented as an entity mapped to a logical node, through which the SME may receive outputs generated by AI agents, provide contextual feedback, flag discrepancies, approve or reject proposed decisions, optionally inject new information into the workflow, and/or the like. The SME node may also allow for asynchronous interaction with the system, where task state and data lineage are preserved for review and re-engagement at a later time. The system may assign different permissions, visibility scopes, or interaction modalities to users based on their roles or functions. For example, a risk officer may be presented with a risk-adjusted view of the same data that a relationship manager sees in an operational context. SME feedback may be used to update task context, influence subsequent agent behavior, or trigger downstream processes, thereby enabling human-in-the-loop or human-on-the-loop modes of operation. Unless otherwise specified, the term "user" or "SME" refers to a user possessing domain expertise and actively participating in the task execution or validation loop.

As used herein, the term "subsystem" refers to any collection of software components, hardware components, firmware components, or any combination thereof, configured to perform one or more specific functions within a larger system architecture. A subsystem may include, but is not limited to, one or more processors, memory devices, storage units, communication interfaces, execution environments, or programmed logic circuits. A subsystem may be implemented as a distinct physical unit, as a logical partition within a shared hardware environment, or as a distributed set of cooperating resources operating across networked devices. In some embodiments, a subsystem may comprise executable software instructions stored on a non-transitory computer-readable medium and executed by one or more processing units. In other embodiments, a subsystem may include dedicated hardware elements, such as application-specific integrated circuits (ASICs), field-programmable gate arrays (FPGAs), or purpose-built server systems. Subsystems may operate autonomously or in coordination with other subsystems, and communication between subsystems may occur through defined interfaces, shared memory structures, inter-process messaging, or network protocols. Unless explicitly stated otherwise, the term "subsystem" is intended to be interpreted broadly and to encompass any technological means suitable for performing the described operations.

As used herein, a "user interface" or "dashboard" may be a point of human-computer interaction and communication in a device (e.g., end-point device) that allows a user to input information, such as commands or data, into a device, or that allows the device to output information to the user. In some embodiments, user interface or dashboard may refer to a computer-implemented graphical user interface configured to display, in real time or near real time, information generated, aggregated, or updated by one or more subsystems, including outputs from a plurality of AI agents, task execution states, SME interactions, and system performance metrics. As such, a user interface or dashboard may include visual elements such as charts, tables, progress indicators, status flags, dynamic summaries, or notification panels. The user interface or dashboard may operate as an interactive environment allowing users to observe, validate, annotate, or modify outputs in accordance with their assigned roles, access privileges, or operational responsibilities.

As used herein, "authentication credentials" refer to information, attributes, or digital artifacts that are used to verify the identity or authorization status of a user, process, application, computing node, or computing cluster attempting to access protected resources within the system. Authentication credentials may include, without limitation, usernames, passwords, personal identification numbers (PINs), passcodes, cryptographic keys, biometric identifiers (e.g., iris scans, retina scans, fingerprints, palm vein patterns, digital bone structure characteristics), responses to security questions, behavioral biometrics (e.g., device motion patterns, keystroke dynamics), or secure hardware tokens. Authentication may further extend to applications, agent nodes, or data access requests, with credentials being required to access specific system components, computing resources, or data repositories. **In** some configurations, authenticated identities may also be assigned permission attributes defining the scope of allowed operations, supporting fine-grained access control within the system. Authentication may occur on a session basis, transaction basis, or continuously based on system security policies.

As used herein, "operatively coupled" means that the components may be formed integrally with each other, or may be formed separately and coupled together. Furthermore, "operatively coupled" means that the components may be formed directly to each other, or to each other with one or more components located between the components that are operatively coupled together. Furthermore, "operatively coupled" may mean that the components are detachable from each other, or that they are permanently coupled together. Furthermore, operatively coupled components may mean that the components retain at least some freedom of movement in one or more directions or may be rotated about an axis (i.e., rotationally coupled, pivotally coupled). Furthermore, "operatively coupled" may mean that components may be electronically connected and/or in fluid communication with one another.

As used herein, an "interaction" refer to any communication between one or more users, one or more entities or institutions, one or more devices, nodes, clusters, or systems within the distributed computing environment described herein. For example, an interaction may refer to a transfer of data between devices, an accessing of stored data by one or more nodes of a computing cluster, a transmission of a requested task, or the like.

It should be understood that the word "example" or "exemplary" is used herein to mean "serving as an instance, or illustration." Any implementation described herein as "example" or "exemplary" is not necessarily to be construed as advantageous over other implementations.

As used herein, "determining" may encompass a variety of actions. For example, "determining" may include calculating, computing, processing, deriving, investigating, ascertaining, and/or the like. Furthermore, "determining" may also include receiving (e.g., receiving information), accessing (e.g., accessing data in a memory), and/or the like. Also, "determining" may include resolving, selecting, choosing, calculating, establishing, and/or the like. Determining may also include ascertaining that a parameter matches a predetermined criterion, including that a threshold has been met, passed, exceeded, satisfied, etc.

### Example System Environment

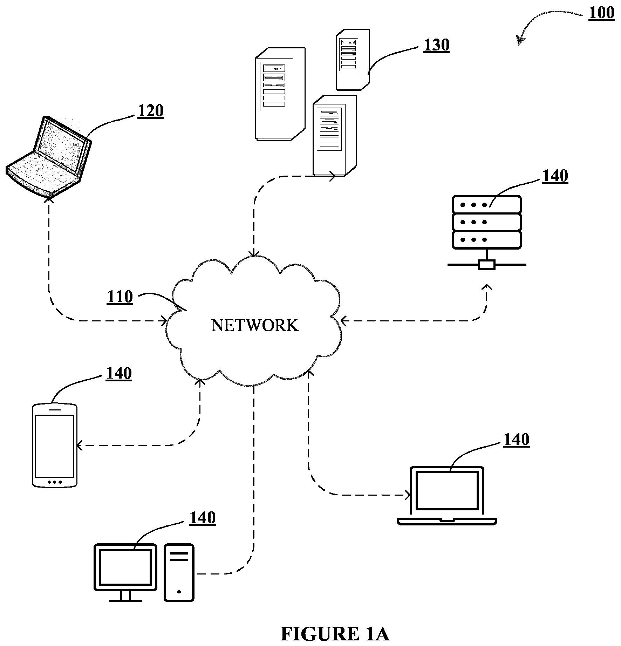

Figure 1A illustrates an example system environment 100 for distributed task execution and collaborative decision-making, in accordance with an embodiment of the disclosure. As shown in Figure 1A, the system environment 100 includes a network 110 that interconnects an end-point device 120, a system 130, and one or more SME devices 140. Figure 1A illustrates only one example of an embodiment of the system environment 100, and it will be appreciated that in other embodiments one or more of the systems, devices, and/or servers may be combined into a single system, device, or server, or be made up of multiple systems, devices, or servers. Also, the distributed computing environment 100 may include multiple systems, same or similar to system 130, with each system providing portions of the necessary operations (e.g., as a server bank, a group of blade servers, or a multi-processor system).

The end-point device 120 may include any suitable computing device capable of initiating communications over the network 110, transmitting structured task specifications, and receiving outputs or updates from the system 130. Examples of the end-point device 120 may include, but are not limited to, laptops, desktop computers, tablets, smartphones, dedicated application servers, and other network-enabled hardware platforms. In some embodiments, the end-point device 120 may incorporate application software or browser-based interfaces through which a task creator, operator, or system administrator defines the decision objective, specifies associated data references, sets execution parameters, or monitors task progress. In further embodiments, end-point device 120 may encompass edge computing nodes, such as routers, routing switches, integrated access devices (IADs), and devices compatible with 5G mobile networks, delivering localized data preprocessing, reduced transmission latency, and enhanced connectivity with the broader network infrastructure. The end-point device 120 may further include components enabling secure communications, such as encryption modules, hardware security modules (HSMs), or virtual private network (VPN) clients, to support authenticated and protected interactions with system 130 over public or private network links.

The system 130 may comprise a set of server-class machines, computing platforms, or distributed resources responsible for orchestrating task segmentation, agent assignment, intermediate output management, and communication with SME devices 140. In various embodiments, the system 130 may include, but is not limited to, web servers, database servers, application servers, file servers, or combinations thereof, deployed either on-premises, in a private cloud, or via public cloud infrastructures. The system 130 may further include general-purpose computing devices, such as laptops, desktop computers, high-performance workstations, digital audio/video processors, or mainframe computers configured for backend processing and coordination. In certain embodiments, the system 130 may extend to specialized networked devices, including wearable technologies, Internet-of-Things (IoT) nodes, kiosk terminals, entertainment consoles, or other embedded systems, enabling scalable processing across heterogeneous digital environments. The system 130 may be configured with virtualization platforms, container orchestration frameworks (e.g., Kubernetes), or serverless architectures to dynamically provision and manage computing resources based on operational demands. Moreover, system 130 may implement secure access controls, fault tolerance mechanisms, distributed data storage, load balancing modules, and monitoring tools to maintain high availability, reliability, and responsiveness throughout task execution workflows.

The SME devices 140 may include any computing devices capable of connecting to the network 110 and interacting with the system 130 to facilitate human validation, oversight, or augmentation of AI-generated outputs. In various embodiments, SME devices 140 may comprise laptops, desktop computers, tablets, smartphones, thin clients connected to centralized application servers, or virtualized desktop environments (VDI) operating through cloud infrastructure. These devices may host user interfaces that allow SMEs to review, validate, annotate, correct, or modify intermediate or final outputs generated by AI agents operating within the system 130. In some configurations, SME devices 140 may include secure authentication modules, biometric identity verification systems, or cryptographic hardware modules to support identity assurance, role-based access control, and regulatory compliance. Additionally, SME devices 140 may be configured with visualization tools, provenance exploration modules, audit trail viewers, and collaborative editing environments to support real-time interaction with complex data artifacts. In certain embodiments, SME devices 140 may operate across different network modalities, including secure VPN connections, mobile broadband networks, satellite links, or dedicated enterprise communication backbones, enabling geographically distributed SMEs to participate in decision-making workflows securely and efficiently.

The network 110 may include a distributed network architecture that enables seamless data exchange among the end-point device 120, the system 130, and one or more SME devices 140. The network 110 may span a variety of interconnected network types, such as telecommunications networks, local area networks (LANs), metropolitan area networks (MANs), wide area networks (WANs), personal area networks (PANs), and global area networks (GANs), including Internet-based infrastructures. In some embodiments, network 110 may incorporate both public and private network segments and may support hybrid deployments combining on-premises resources with cloud-based environments. Network 110 may employ a range of interconnection technologies, including wired (e.g., Ethernet, fiber optics), wireless (e.g., Wi-Fi, Bluetooth, LTE, 5G), and optical communication technologies. The network architecture may further leverage advanced networking paradigms, such as software-defined networking (SDN), network function virtualization (NFV), and content delivery networks (CDN) to optimize routing, load balancing, and service delivery. Security mechanisms integrated into the network 110 may include end-to-end encryption, firewall protection, intrusion detection systems, secure tunneling protocols (e.g., VPNs, IPsec), and zero-trust architecture principles. The network 110 may be designed to support dynamic scaling, fault tolerance, redundancy, and high availability to maintain operational continuity in the event of node failures, congestion, or cybersecurity threats. In some embodiments, the network 110 may also incorporate edge computing nodes, allowing latency-sensitive computations to be performed closer to the data sources or end-points.

It should be understood that the configuration of system environment 100 illustrated in Figure 1A is provided for illustrative purposes only and does not limit the scope of the disclosure. The particular arrangement, naming, and interconnection of the end-point device 120, system 130, and SME devices 140 are conceptual and may vary depending on implementation requirements. In various embodiments, the functionalities attributed to separate devices or systems may be combined within a single device, distributed across multiple devices, or executed across geographically dispersed systems. Furthermore, while Figure 1A depicts a network 110 connecting distinct devices, alternative embodiments may employ different networking topologies, including peer-to-peer, mesh, or federated configurations. The specific technologies, protocols, and hardware/software architectures employed within the end-point device 120, system 130, SME devices 140, and network 110 are likewise non-limiting and may be adapted to accommodate variations in operational needs, scalability considerations, security constraints, or evolving technical standards. No limitation should be inferred from the depicted arrangement or examples unless explicitly stated otherwise herein.

### Example Component-Level Structure of the System 130

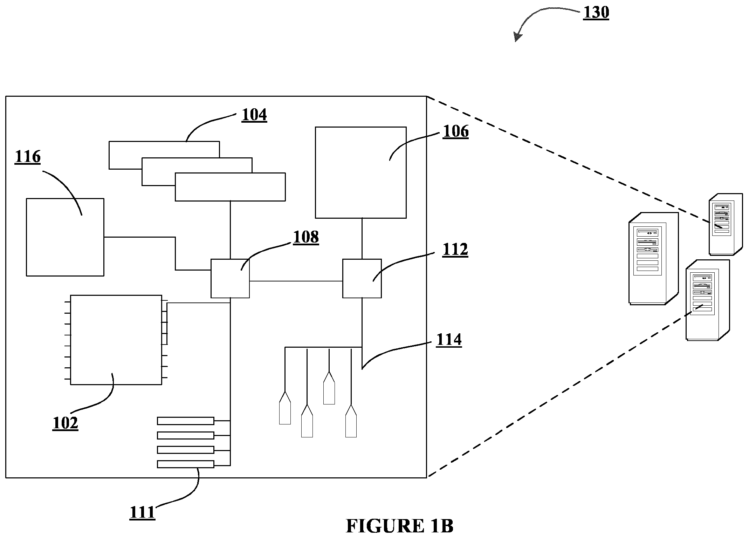

Figure 1B illustrates an exemplary component-level structure of the system 130, in accordance with an embodiment of the disclosure. As shown in Figure 1B, the system 130 may include a processor 102, memory 104, input/output (I/O) device 116, and a storage device 110. The system 130 may also include a high-speed interface 108 operatively coupled to the memory 104, and a low-speed interface 112 operatively coupled to a low-speed bus 114 and the storage device 110. Each of the components 102, 104, 108, 110, and 112 may be interconnected through one or more communication buses, fabric interconnects, or other data transfer architectures, and may be mounted on a common motherboard, in a blade chassis, or otherwise appropriately housed to meet design, redundancy, and scalability requirements.

As described herein, the processor 102 may include or host a plurality of specialized subsystems to perform discrete portions of the processes and methods described herein. Each subsystem may be a self-contained module within the broader system 130, capable of independent configuration, optimization, and execution of assigned functions in coordination with other system components. For instance, the processor 102 may host an orchestration subsystem configured to segment incoming tasks into discrete subtasks, allocate subtasks to available AI agents, and dynamically manage agent coordination during execution. Additionally, the processor 102 may execute a context dissemination subsystem responsible for broadcasting task-specific context information to relevant agent nodes and SME interfaces. A provenance tracking subsystem may operate concurrently to log agent actions, data accesses, SME interventions, and task state modifications, thereby enabling end-to-end traceability of decision artifact generation. Further examples may include a result integration subsystem configured to assemble validated agent outputs and SME inputs into a unified final decision artifact. A dashboard aggregation subsystem may also be implemented to provide real-time monitoring of agent activities, subtask completion status, and SME interactions through an interactive dashboard interface. These subsystems may be instantiated as modular software components operating within the system 130 and may interact with the memory 104 and storage device 110 to retrieve and persist intermediate states, execution metadata, and final outputs. Each subsystem may execute independently or collaboratively with other subsystems depending on task complexity, system load, and operational policies.

The processor 102 may be configured to process computer-executable instructions, such as instructions of an application, microservice, or orchestration framework that performs the functionalities disclosed herein. These instructions may reside temporarily or persistently in the memory 104 (e.g., a non-transitory storage device) or on the storage device 110. The processor 102 may support parallelism and distributed processing where appropriate, using multiple execution cores, multi-threading, or hardware acceleration techniques. In certain implementations, the system 130 may utilize multiple processors, possibly of heterogeneous architectures (e.g., CPU, GPU, TPU), interconnected through high-speed communication links, to improve performance, resilience, or scalability when executing portions of the processes described herein.

The memory 104 may store operational information and execution context within the system 130. In one implementation, the memory 104 is a volatile memory unit or units, such as volatile random access memory (RAM), which may further include one or more cache areas for the temporary storage of critical information, such as operating system instructions, process state variables, execution graphs, subtask dependencies, and agent coordination metadata. In another implementation, the memory 104 includes non-volatile memory components. The memory 104 may also be realized as hybrid memory configurations, including persistent memory modules that combine DRAM and flash technologies. The memory 104 serves to store, retrieve, and modify structured and unstructured data necessary for real-time processing, state management, orchestration control, provenance tracking, and decision artifact assembly. In various embodiments, the memory 104 may also include memory protection features to safeguard sensitive data accessed or generated during execution.

The storage device 110 may provide persistent mass storage for the system 130. The storage device 110 may include or be operatively connected to one or more computer-readable media, including, but not limited to, hard disk drives (HDDs), solid-state drives (SSDs), optical drives, flash memory arrays, or storage class memory systems. The storage device 110 may be configured for high-throughput and/or high-availability access patterns and may support redundancy techniques such as RAID or erasure coding to mitigate data loss risks. In various embodiments, the storage device 110 may store task specifications, execution logs, audit trails, agent outputs, SME validation records, system configuration files, operational snapshots, and intermediate artifacts generated throughout task execution. Information may be stored in both structured (e.g., SQL databases) and unstructured (e.g., document repositories, object stores) formats, supporting the diverse data needs of the distributed task execution environment.

The high-speed interface 108 may be responsible for managing bandwidth-intensive internal operations for the system 130, such as memory access, high-priority I/O operations, inter-processor communication, and direct access to high-throughput devices. The low-speed interface 112 may manage operations requiring lower bandwidth, such as storage device interaction, peripheral device management, and user input/output handling. Such functional separation of high-speed and low-speed operations optimizes system performance, resource utilization, and latency profiles. In certain embodiments, the high-speed interface 108 may interconnect the memory 104, the I/O device 116 (e.g., via a dedicated graphics processor or an AI accelerator), and high-speed expansion ports 111 configured to accept additional compute or storage modules. Meanwhile, the low-speed controller 112 may interface with legacy storage protocols, general-purpose expansion ports, and low-speed peripherals connected through the low-speed expansion port 114. Communication standards supported by these interfaces may include PCIe, SATA, USB, Ethernet, Wi-Fi, Bluetooth, and/or other wired or wireless standards as appropriate.

The system 130 may be realized in a variety of physical implementations depending on deployment requirements. For example, the system 130 may be configured as a standard server node operating within a data center, a rack-mount blade server in a high-density compute cluster, or a cloud-native instance operating within a virtualized or containerized infrastructure. Alternatively, the system 130 may include or be combined with mobile or edge computing resources, enabling low-latency processing closer to data sources. The components of the system 130 may be implemented on a single physical device or distributed across multiple cooperating devices interconnected over a high-speed network. Embodiments may employ redundancy, dynamic scaling, and fault tolerance mechanisms to meet operational requirements such as availability, resilience, and throughput. In various embodiments, the system 130 may participate as a node in a broader distributed system that coordinates task execution across multiple systems operating in tandem.

### Example Component-Level Structure of the Devices

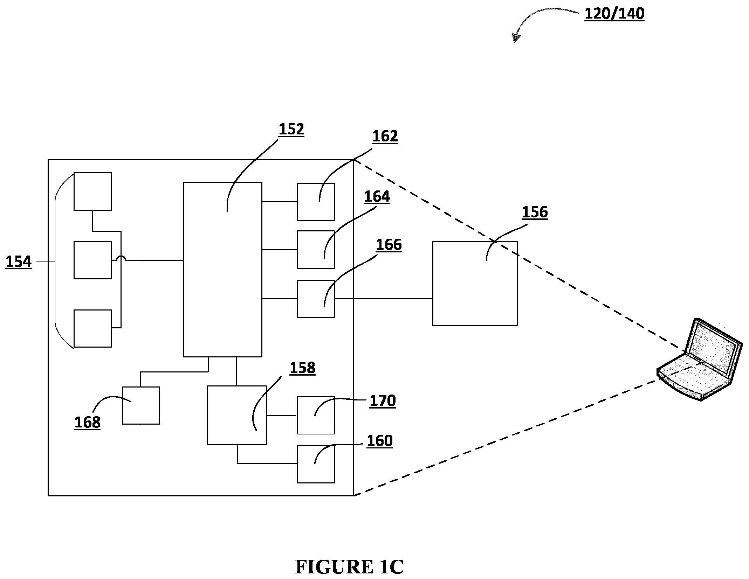

Figure 1C illustrates an exemplary component-level structure that may be used to implement either or both of the end-point device 120 and the SME device(s) 140, in accordance with an embodiment of the disclosure. As shown in Figure 1C, the end-point device 120 and the SME device(s) 140 may each include a processor 152, memory 154, an input/output (I/O) device such as a display 156, a communication interface 158, and a transceiver 160, among other components. Either device may optionally include a storage device 161, such as a microdrive or other mass storage device, to provide additional non-volatile storage capacity. Each of the components 152, 154, 156, 158, 160, and 161 may be interconnected using one or more buses and may be mounted on a common motherboard or otherwise integrated as appropriate for the form factor and functional requirements of the device.

The processor 152 may be configured to execute instructions within the end-point device 120 and the SME device(s) 140, including instructions stored in the memory 154, which may embody an application or multiple applications performing one or more of the functions disclosed herein, such as task specification, decision validation, data review, or task submission. The processor 152 may be implemented as a system-on-chip (SoC) or as a chipset comprising multiple analog and digital processing cores. The processor 152 may coordinate operations among other device components, manage user interfaces, execute communication protocols, and interact with remote systems such as the system 130.

The processor 152 may communicate with users through a control interface 164 and a display interface 166 coupled to the display 156. The display 156 may utilize various display technologies such as TFT LCD (Thin-Film Transistor Liquid Crystal Display), OLED (Organic Light-Emitting Diode), or other appropriate technologies to present graphical user interfaces, task data, validation requests, or decision outputs. The control interface 164 may receive user input through mechanisms such as touchscreens, keyboards, mice, or styluses and convert such inputs for interpretation by the processor 152. An external interface 168 may provide additional communication capabilities, supporting both wired (e.g., USB, Ethernet) and wireless (e.g., Wi-Fi, Bluetooth) communications as needed.

The memory 154 may store operational data, applications, temporary context information, or validation records. Memory 154 may include volatile memory units (e.g., DRAM), non-volatile memory units (e.g., flash memory, EEPROM), or a combination thereof. Expansion memory may also be connected through an expansion interface (not shown), allowing additional storage space, application hosting, or secure data modules to be installed. In some configurations, memory 154 or expansion memory may include secure elements configured to store sensitive authentication credentials or validation keys necessary for trusted interactions with the system 130.

In some implementations, a computer program product may be embodied in the information carrier formed by the memory 154, expansion memory, storage device 161, or directly within the processor 152. Such a program product may include instructions that, when executed, perform one or more of the methods described herein for end-point operation, SME validation, or communication management.

The end-point device 120 and the SME device(s) 140 may transmit and/or receive information and commands to and from the system 130 via communication interface 158 and transceiver 160. Communications may be conducted over various networks using protocols from the Internet Protocol (IP) suite (e.g., TCP/IP) or other telecommunications standards (e.g., 2G, 3G, 4G, 5G). The communication interface 158 may manage end-to-end communication processes, from packet generation and routing to application-layer data exchange. Authentication subsystems may be triggered during communication sessions to enforce security measures, such as validating user credentials before allowing access to protected task data, decision artifacts, or control interfaces. Additionally, short-range communication protocols such as Bluetooth and Wi-Fi may be employed through the external interface 168, enabling near-area device integration when necessary. The end-point device 120 and SME device(s) 140 may also include GPS receiver modules 170 to provide real-time location tracking or geolocation metadata, which may be used to support specific location-aware applications or security controls

Audio communication capabilities may be provided through audio codec 162, enabling the devices to receive user input through microphones, output sound through speakers, and support audio-based user interfaces or multimedia communication channels. This may be particularly useful in scenarios where voice commands or audible alerts are required to facilitate task monitoring or validation workflows.

It should be understood that the end-point device 120 and SME device(s) 140 may be realized in a variety of hardware and software combinations. These may include traditional digital electronic circuitry, integrated circuits, application-specific integrated circuits (ASICs), programmable hardware, firmware, and/or software components. Implementations may further leverage secure processing architectures, virtualization environments, and containerized deployment models depending on the operational and security requirements of a given deployment scenario.

Although the endpoint device 120 and SME device(s) 140 may share similar or identical hardware and software configurations, it should be understood that they may also differ depending on the operational requirements, user roles, and security constraints associated with their respective functions. For example, an endpoint device 120 operated by a task initiator may emphasize task creation interfaces, connectivity modules, and administrative controls, while an SME device 140 may prioritize secure content review interfaces, validation tools, and provenance visualization components. Differences may also arise with respect to processing power, storage capacity, display capabilities, input/output modalities, and authentication mechanisms, depending on whether the device is optimized for task initiation, task validation, or both. In some embodiments, role-specific device configurations may be dynamically assigned or adjusted through device management policies or virtualization layers.

### Example System Architecture

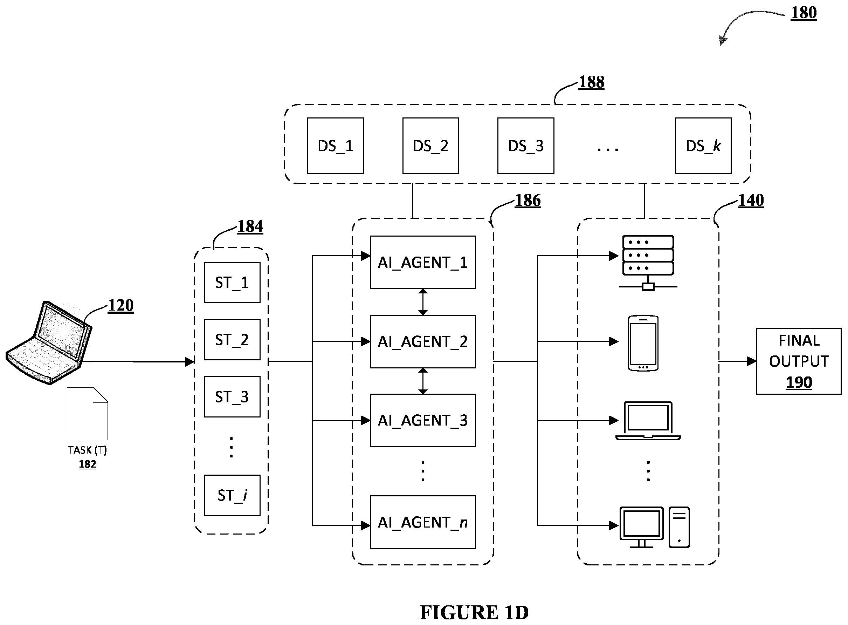

Figure 1D illustrates an example system architecture 180 for distributed AI agent-orchestrated task execution with SME validation and final decision generation, in accordance with an embodiment of the disclosure. As shown in Figure 1D, an end-point device 120 may be configured to initiate a task 182. As described herein, the end-point device 120 may include any suitable computing device, such as a laptop, workstation, mobile device, application server, or other computing platform capable of communicating task specifications into the system. The task 182 may define a decision objective, associated data references, operational constraints, and execution parameters.

Upon receipt of the task 182, the task may be segmented into a plurality of subtasks 184. Each subtask (e.g., ST_1, ST_2, ST_3, ..., ST_*i*) may correspond to a discrete operational unit required to achieve the overarching task objective. Subtask boundaries may be determined based on predefined execution graphs, dynamic decomposition logic, or rule-based templates associated with the task domain.

A plurality of AI agents 186 may be instantiated to execute the subtasks. Each AI agent (e.g., AI_AGENT_1, AI_AGENT_2, AI_AGENT_3, ..., AI_AGENT_*n*) may be provisioned with subtask-specific context, access to relevant datasets, and execution policies enabling dynamic delegation, inter-agent coordination, and subtask adaptation during runtime. The AI agents may communicate with one another to facilitate coordination, synchronize task state information, or dynamically reassign subtasks based on execution conditions.

A set of data sources 188 may be accessible to the AI agents during subtask execution. Each data source (e.g., DS_1, DS_2, DS_3, ..., DS_*k*) may include structured databases, unstructured document repositories, API-based services, knowledge graphs, or other information repositories. AI agents may query, retrieve, or process input data from the data sources 188 in accordance with assigned permissions, task requirements, and applicable validation constraints.

Following execution by the AI agents 186, outputs may be transmitted to one or more SME devices 140 for validation, correction, augmentation, or oversight. Each SME device (e.g., laptop, mobile device, server, workstation) may provide an interface through which human SMEs review, validate, or adjust intermediate agent outputs prior to their aggregation into a final decision artifact. The SME devices 140 may receive outputs selectively, routed based on task-specific rules, output categorization, or validation workflows.

Upon completion of SME review, validated outputs may be aggregated and synthesized into a final output 190. The final output 190 may be transmitted back to the originating end-point device 120 or forwarded to external systems for additional processing, operationalization, or archival.

It should be understood that the depiction of the system architecture 180 in Figure 1D is illustrative and not limiting. The arrangement, grouping, and specific labeling of components, such as end-point device 120, task 182, subtasks 184, AI agents 186, data sources 188, SME devices 140, and final output 190, are provided for conceptual clarity and do not impose structural or architectural limitations. In various embodiments, one or more of the illustrated components may be combined, subdivided, duplicated, or omitted. For example, the operations attributed to different AI agents may be consolidated into a smaller set of agents, or conversely distributed among additional specialized agents. Similarly, SME validation may be performed by different types of user devices, or the final output 190 may be routed to different end-points depending on system requirements. Variations, modifications, and enhancements to the disclosed architecture are contemplated within the scope of the disclosure.

### Example Method for Structuring and Executing Agentic Tasks in a Multi-Dimensional Lattice-Based Computational Topology

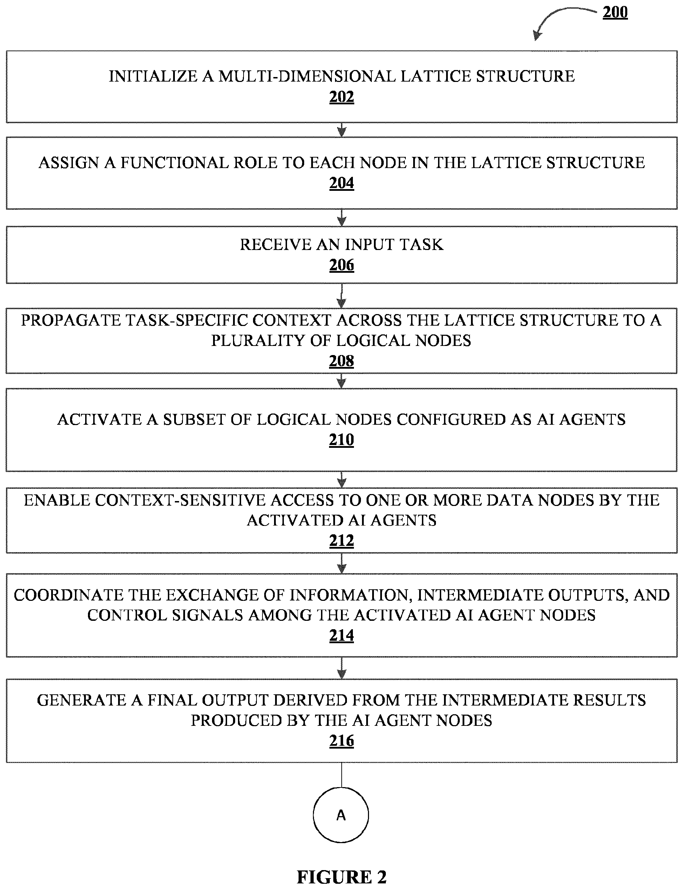

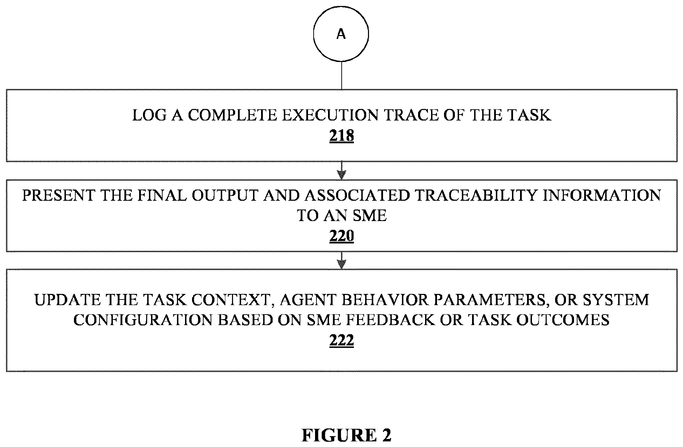

Figure 2 illustrates an example method 200 for structuring and executing agentic tasks in a multi-dimensional lattice-based computational topology, in accordance with an embodiment of the disclosure. As shown in block 202, the process flow includes initializing, using a lattice instantiation subsystem, a multi-dimensional lattice structure comprising a plurality of computational nodes, each node configured to represent a functional entity selected from a group consisting of human SMEs, autonomous agents, and data repositories.

**In** some embodiments, the lattice instantiation subsystem may include a node manager configured to allocate logical memory and processing resources to each node. Each node may be instantiated with a unique identifier and associated with metadata defining its role, permitted interactions, and security credentials.

The lattice structure may be generated as a graph-based data model, wherein edges represent potential communication channels or data flow paths between nodes. The graph may be constructed dynamically in response to an incoming task or preconfigured according to a domain-specific template. **In** some embodiments, node placement within the lattice may be influenced by contextual affinity or prior usage statistics, optimizing for locality of computation or communication efficiency.

In some embodiments, the lattice structure may be instantiated in a containerized architecture, where each node is deployed as an isolated microservice or container, permitting independent scaling and lifecycle management. In such cases, orchestration may be handled by container management platforms (e.g., Kubernetes), with the lattice topology encoded in service mesh configurations. In some other embodiment, the lattice may be implemented as a memory-resident data structure within a single virtual machine or execution environment, suitable for constrained applications with limited resource needs.

As shown in block 204, the process flow includes assigning, using an entity-mapping subsystem, a functional role to each node in the lattice structure, wherein the functional role is selected from a predefined set including: (i) SME, (ii) autonomous agent, and (iii) data repository node.

The entity-mapping subsystem may map functional entities-such as instantiated AI models, domain-specific human users, or static/dynamic data sources-to logical nodes within the previously instantiated lattice. The entity-mapping subsystem may operate through a combination of configuration rules and dynamic resource discovery. In some embodiments, a registry of available agents, SMEs, and data sources may be consulted to determine entity availability, compatibility with the incoming task, and operational status.

Upon selection, the entity-mapping subsystem may associate each node with a role-specific configuration file or metadata schema that governs permissible actions, inter-node communication policies, and interface modalities. For example, agent nodes may be assigned a task execution protocol and tool access configuration, whereas SME nodes may be configured with input/output visualization interfaces to allow for human review and feedback.

In some embodiments, role assignment may be driven by task-specific requirements encoded in a task orchestration file, such as a JSON or YAML descriptor. This file may specify that certain subtasks require human oversight (e.g., risk evaluation) while others are to be delegated to agents (e.g., data extraction from semi-structured documents). In this configuration, the entity-mapping subsystem may parse the orchestration file and assign roles accordingly.

In some embodiments, roles may be assigned adaptively based on system availability or load-balancing constraints. For instance, when an AI agent node responsible for market analysis is unavailable, the system may reassign its role to an equivalent model instance or escalate the task to an SME node if appropriate.

As shown in block 206, the process flow includes receiving, using a task ingestion subsystem, an input task comprising at least one objective, an associated data payload, and optionally one or more constraints or contextual parameters defined by a system operator or SME. In one embodiment, the task ingestion subsystem includes an API end-point or task submission interface that accepts structured input-such as a JSON object or form-based submission-defining the parameters of the task. The task payload may include the specific action to be performed (e.g., generate a credit memo, assess financial risk), references to relevant documents or datasets (e.g., **PDF** files, database entries), and optional configuration parameters such as compliance flags, reporting formats, or reviewer assignments.

Upon receipt, the task ingestion subsystem parses the input and generates an internal task representation comprising a task identifier, metadata, initial context, and a mapping to the relevant logical nodes (e.g., agents, SMEs, data repositories). The internal task object may be stored in a centralized coordination layer or distributed task queue, depending on system architecture. **In** some implementations, the task ingestion subsystem also performs validation or preprocessing on the input payload. For instance, the task ingestion subsystem may check for completeness, verify data source availability, or enforce role-based access constraints before forwarding the task to the orchestration layer for execution. Where applicable, SME-defined constraints may be applied at this stage-for example, limiting which agents may access sensitive data or requiring human approval before certain subtasks are initiated.

In some embodiments, the tasks may also be ingested via programmatic triggers such as incoming emails, webhook events, or file drops into monitored repositories. These alternative ingestion modes may include logic for extracting task definitions from unstructured sources using embedded agent capabilities (e.g., NLP-based email parsing).

As shown in block 208, the process flow includes propagating, using a context dissemination subsystem, task-specific context across the lattice structure to a plurality of logical nodes, wherein each node modifies, interprets, or utilizes the context based on its assigned functional role.

In one embodiment, the context dissemination subsystem operates by encoding the task context into a structured data format-such as a hierarchical or graph-based object-containing task identifiers, objective descriptions, relevant data references, agent instructions, and any applicable SME directives or constraints. This context object is broadcast or selectively routed to nodes based on a routing table or a dependency graph that defines which entities are relevant to the current task instance.

AI agent nodes receiving the context may parse it to determine whether to activate specific models, load prompt templates, or retrieve external data. For example, a content synthesis AI agent may extract relevant portions of the task objective and pair them with document references to begin drafting a preliminary output. **In** contrast, a validation AI agent may use the same context to initialize confidence scoring heuristics or prepare evaluation checkpoints. SME nodes interpret the context differently, often in conjunction with user-facing interfaces. For instance, a credit officer may be presented with a filtered version of the context that includes summary data, open issues requiring review, and interactive tools for feedback submission. Data nodes receiving the context may expose relevant datasets to agent nodes, possibly limiting access to subsets based on contextual relevance or access control rules. In some configurations, the data node may also perform prefiltering or annotation to optimize agent consumption. Alternative embodiments may employ a publish-subscribe model, in which each logical node subscribes to specific context types or task identifiers. Upon task initialization, the context dissemination subsystem then emits the task context to a distributed message broker, from which relevant nodes receive and act upon the message.

As shown in block 210, the process flow includes activating, using an agent orchestration subsystem, a subset of logical nodes configured as AI agents, each AI agent operable to perform a domain-specific subtask based on the received task context.

In one embodiment, the agent orchestration subsystem maintains a registry of available agent types, capabilities, resource requirements, and operational status. Upon receipt of the propagated context, the agent orchestration subsystem may evaluate the task objective and decomposes it-either programmatically or through a pre-defined task graph-into constituent subtasks. Each subtask may be mapped to one or more AI agent types capable of executing the function (e.g., document parsing, sentiment analysis, risk scoring, or draft generation).

The system may then identify eligible agent nodes from the registry, instantiates them if not already active, and dispatches the subtask along with the corresponding contextual subset. Instantiation may occur within containerized environments, virtual machines, or serverless compute contexts, depending on system configuration and agent requirements. AI agent-specific configurations, such as prompt templates, tool access, and output formats, may also be provisioned at this stage.

Each AI agent may execute its subtask independently or in coordination with other agents, leveraging embedded AI models such as fine-tuned transformer-based LLMs. The agent may access data nodes via secured APIs or shared memory structures and may optionally emit intermediate outputs or signals back to the orchestration subsystem for logging, validation, or downstream propagation. In some embodiments, AI agent activation may follow an event-driven model, where AI agents are triggered by changes in task state or results generated by upstream agents. For instance, an output from a document extraction agent may serve as input to a validation AI agent or synthesis AI agent, with the agent orchestration subsystem handling sequencing and dependency resolution. In some embodiments, AI agents may operate in parallel where the task permits, with their outputs later aggregated or arbitrated by a coordinating node or agent. This model supports performance optimization and enables partial result availability in real-time workflows.

As shown in block 212, the process flow includes enabling, using a data access control subsystem, context-sensitive access to one or more data nodes by the activated AI agents, wherein each data node comprises structured, semi-structured, or unstructured data relevant to the task objective.

In some embodiments, the data access control subsystem may include a permissions engine and a data routing layer. The permissions engine may evaluate each data request issued by an AI agent against a policy framework that defines allowable access based on agent identity, task context, data sensitivity classification, and any SME-imposed constraints. These policies may be expressed in rule-based form (e.g., access control lists) or through dynamic evaluation using attribute-based access control (ABAC) models. Upon authorization, the data routing layer determines the optimal access path to the requested dataset. Data nodes may expose APIs, RESTful interfaces, database query end-points, or file access protocols, depending on their implementation. In some cases, the data access control subsystem may apply prefetching, caching, or rate-limiting logic to manage performance or cost constraints. For example, an AI agent requesting access to a large corpus of historical credit memos may receive only a relevant filtered subset, determined based on keyword matches or vector similarity to the current context.

AI Agents may access and retrieve data in raw form or invoke data pre-processing modules embedded within the data node. For unstructured data (e.g., PDFs, emails), these modules may include OCR, natural language segmentation, or metadata tagging. For structured sources (e.g., SQL databases), the access subsystem may transform query outputs into standardized formats such as JSON, CSV, or domain-specific schemas aligned with agent expectations.

In some embodiments, the data access process may include logging and traceability. Each access event may be recorded with a timestamp, agent identifier, data node identifier, and purpose of access. This log is appended to the task's provenance record and may later be visualized or audited by SMEs. In privacy-sensitive applications, the data access control subsystem may implement data masking, redaction, or synthetic substitution techniques to limit agent exposure to sensitive fields.

As shown in block 214, the process flow includes coordinating, using an inter-agent communication subsystem, the exchange of information, intermediate outputs, and control signals among the activated AI agent nodes to enable task decomposition, dependency resolution, and collaborative output generation.

In one embodiment, the inter-agent communication subsystem may include a messaging layer, a shared memory abstraction, and a coordination policy engine. The messaging layer may provide asynchronous communication channels between agent nodes, allowing agents to emit structured messages-such as task updates, content drafts, requests for subtask delegation, or validation flags-tagged with identifiers, message types, and optional routing metadata. Messages may be delivered using event queues, pub/sub mechanisms, or direct message passing via HTTP or RPC protocols.

The shared memory abstraction allows for agents to write and read context, outputs, or metadata to a common, logically centralized repository. This memory may be implemented in practice as a distributed key-value store, a versioned document database, or a task state graph with append-only logging. AI agents may access only relevant partitions of the shared memory, as defined by task scope and access permissions.

A coordination policy engine may govern how AI agents respond to or initiate communication. For example, an evaluation AI agent may be configured to wait until inputs from two upstream agents-such as a risk scoring agent and a financial projection agent-are available. The coordination policy engine may support blocking, non-blocking, and priority-based execution models and may include rule-based logic for initiating fallback agents, triggering SME review, or invoking arbitration mechanisms.

In some embodiments, AI agents may delegate subtasks to other agents through explicit communication. For example, a synthesis AI agent generating a loan summary may identify a gap in geopolitical analysis and delegate that portion of the analysis to a market research AI agent. The delegated subtask is registered, and its results are routed back through the same communication and memory infrastructure, enabling traceability and structured reassembly of the final output.

Alternative embodiments may incorporate a "consensus model," wherein multiple agents generate candidate outputs for a task segment, and a voting or arbitration mechanism selects or combines the results. Such a mechanism may rely on a separate validation agent or an LLM-based referee operating under a defined scoring rubric.

As shown in block 216, the process flow includes generating, using a structured output assembly subsystem, a final output derived from the intermediate results produced by the AI agent nodes, wherein the final output is formatted according to task-specific requirements and optionally includes traceability metadata linking content elements to source data and agent actions.

In one embodiment, the structured output assembly subsystem may include an output aggregator, a formatting engine, and a provenance encoder. The output aggregator may collect intermediate results from multiple agent nodes, either by subscribing to the shared memory structure described in block 214 or by receiving output messages via the messaging layer. The output aggregator may organize these outputs according to a task-specific output schema, such as a loan summary template, a risk report, or a market evaluation document.

The formatting engine may process aggregated content and renders it into a machine-readable or human-readable format as specified by task metadata. Formats may include JSON, XML, PDF, HTML, Markdown, or proprietary report formats used in regulated domains (e.g., regulatory compliance reports). The formatting engine may include role-based customization logic, such that the same underlying output is rendered differently for different end users. For example, an executive may receive a one-page summary with financial highlights, while a credit analyst may receive the full technical breakdown and supporting analysis.

The provenance encoder may inject metadata into the final output or store it in an associated file or log. Each content element, such as a sentence, paragraph, data field, or figure, may be tagged with identifiers indicating which agents produced or modified it, what source data was used, and whether human feedback was incorporated, allowing for traceability, auditing, and document-level or field-level explainability.

**In** some embodiments, the structured output may be emitted incrementally or updated dynamically as agent nodes continue to operate. For instance, if a task includes a long-running data analysis, the system may issue preliminary versions of the output with placeholders or estimated values that are replaced as final results become available. Alternative embodiments may generate modular outputs composed of independently generated sections, each maintained and versioned separately. Doing so, enables component-level review and recomposition, which is particularly useful in collaborative workflows involving both agents and SMEs.

As shown in block 218, the process flow includes logging, using a provenance tracking subsystem, a complete execution trace of the task, wherein the trace comprises metadata identifying the sequence of agent actions, data accesses, inter-agent communications, SME interventions, and content modifications performed during task execution.

In one embodiment, the provenance tracking subsystem is implemented as a distributed ledger or an append-only event log that records timestamped entries for each operation performed by any node within the lattice. Each entry may include the following: a unique operation identifier, the acting node's identifier, the action type (e.g., data access, agent delegation, SME edit), input and output references, and the relevant portion of the task context at the time of execution.

The provenance tracking subsystem may operate in conjunction with the shared memory and messaging layers, intercepting and logging events as they are transmitted or executed. For example, when an AI agent queries a data node, a log entry is created recording the query parameters, data node accessed, and agent identity. Similarly, when an SME reviews and modifies an output element, the edit operation is logged along with the original and revised content, user identity, and justification if provided.

In some embodiments, the system may aggregate low-level log entries into higher-level task lineage graphs, which represent task execution as a directed acyclic graph (DAG) of dependent operations. These lineage graphs are used to reconstruct the full decision chain for each output component, enabling downstream traceability and auditability.

Provenance logs may be stored in a secure and queryable format, enabling authorized users to inspect the history of decisions, verify compliance with regulatory or organizational protocols, or replay the execution for debugging or retraining purposes. In regulated environments, the provenance data may be cryptographically signed to prevent tampering and to satisfy audit requirements. Alternative embodiments may support visualizations of the provenance data, such as a lattice diagram or node-graph view embedded in the user interface. These visualizations allow SMEs or auditors to explore how each content element was generated, what sources were used, and whether any discrepancies were encountered or overridden.

As shown in block 220, the process flow includes presenting, using an User interface subsystem, the final output and associated traceability information to an SME, wherein the interface enables the SME to review, validate, modify, or annotate the output and submit feedback into the system for further processing or archival.

**In** one embodiment, the user interface subsystem may be implemented as a web-based or desktop application connected to the underlying orchestration and provenance systems. Upon completion of the task, the interface may display the structured output in a human-readable format tailored to the SME's role. Alongside each output component-such as a paragraph, table, or chart-the interface may render traceability indicators, such as clickable icons or expandable panels, that expose metadata including source documents, contributing agents, and intermediate decision steps.

The interface may support multiple modes of interaction. In review mode, SMEs can inspect each element of the output and view the provenance data without modifying content. In validation mode, SMEs may approve or reject specific output segments, optionally providing justifications or comments. In edit mode, SMEs can directly modify text, numerical values, or structured fields. These modifications are captured in real time, versioned, and logged by the provenance tracking subsystem described in block 218.

The interface may also include task-level controls, such as submission of final approval, reassignment of tasks to specific agents or SMEs, or initiation of a revision cycle based on new information. Where appropriate, the interface displays the current status of the task (e.g., pending validation, completed, flagged for review) and any outstanding issues or open questions generated by agents or prior SME interactions.

In some embodiments, the interface includes visualization modules such as lattice diagrams or task flow graphs that help the SME understand the structure of agent interactions and data dependencies. These tools may assist in evaluating the reasoning path taken by the system and facilitate trust and interpretability.

Alternative embodiments may implement role-specific variants of the interface. For instance, a compliance officer may be shown regulatory alignment indicators, while a credit analyst may see underwriting metrics and model assumptions. The user interface subsystem may also support exporting validated outputs in structured formats for integration into external systems (e.g., enterprise document management, audit repositories).

As shown in block 222, the process flow includes updating, using a feedback integration subsystem, the task context, agent behavior parameters, or system configuration based on SME feedback or task outcomes, thereby enabling iterative refinement, adaptive behavior, or system-level learning.

In one embodiment, the feedback integration subsystem monitors and captures structured and unstructured feedback submitted by SMEs through the user interface described in block 220. Feedback may include direct edits to generated content, approval or rejection indicators, comments, corrections, or metadata annotations (e.g., "incomplete reasoning," "outdated data," or "requires legal review"). Each instance of feedback is associated with the specific node, agent, or content element it pertains to and is timestamped and logged for downstream analysis.

Upon capture, the feedback integration subsystem may evaluate the feedback to determine its applicability and scope. For agent-specific feedback (e.g., errors in content synthesis), the system may update the associated agent's prompt template, adjust tool invocation parameters, or modify routing logic to prevent similar issues in future task executions. For example, if a risk analysis agent consistently omits geopolitical considerations in a certain market, the system may modify its default prompt to include an instruction to evaluate geopolitical context or direct the task to a different agent variant.

For task-context feedback (e.g., SME identifies a missing dataset), the feedback integration subsystem may modify the context object associated with the task and re-initiate specific agent operations or trigger delegated subtasks to address the deficiency. This may include re-querying a data node, re-running an extraction agent, or invoking a different validation workflow.

In more advanced embodiments, feedback may be aggregated across multiple task instances and used to update system-level models or templates. For example, if a pattern of SME corrections is detected across many tasks, the system may generalize those corrections into a rule or prompt refinement and apply it to all future instantiations of a given agent class. Where applicable, the feedback integration subsystem may employ reinforcement learning, few-shot updates, or offline model fine-tuning, depending on infrastructure capabilities and regulatory constraints.

Alternative embodiments may support feedback escalation paths, whereby flagged outputs or unresolved conflicts are forwarded to administrators, legal officers, or oversight personnel for higher-level intervention. The system may also generate feedback reports summarizing SME interactions, agent responsiveness, and system adjustments for audit or performance monitoring purposes.

It should be understood that although the foregoing process flow has been described in terms of discrete steps executed by functionally distinct subsystems-such as a lattice instantiation subsystem, task ingestion subsystem, agent orchestration subsystem, context dissemination subsystem, inter-agent communication subsystem, provenance tracking subsystem, and user interface subsystem-such division is provided for conceptual clarity and does not impose structural limitations. In various embodiments, two or more of these subsystems may be implemented using a shared software module, integrated service, or common execution environment. For example, a single orchestration subsystem may perform both agent activation and inter-agent coordination, or a combined interface module may manage both SME interaction and feedback integration. Moreover, the operations described in separate blocks may occur partially or entirely in parallel, may be merged into composite routines, or may be executed in a different order, provided the functional objectives of the workflow are achieved. Accordingly, the system architecture should be interpreted as modular and implementation-agnostic, and no limitation should be inferred from the depiction of logically distinct subsystems.

The foregoing descriptions of process flows, system components, and subsystem interactions are provided solely for illustrative purposes and are not intended to limit the scope of the disclosure to the specific embodiments described. Variations in implementation, configuration, and sequencing may be employed without departing from the underlying principles of the disclosed disclosure. For example, steps may be combined, omitted, reordered, or repeated in alternative arrangements depending on system design choices, task requirements, or operational constraints. Similarly, references to specific data formats, user roles, or AI model architectures are illustrative and should not be construed as limiting.

### Example Method for AI Agent-Orchestrated Workflow for Collaborative Decision-Making

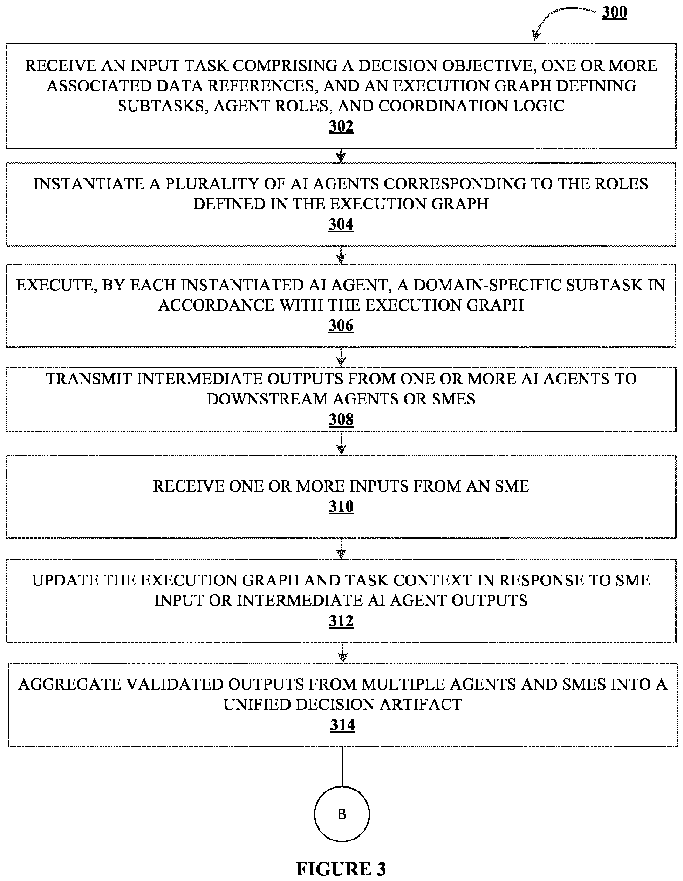

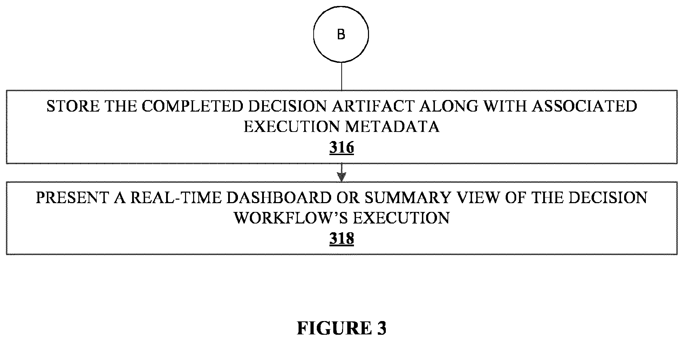

Figure 3 illustrates an example method 300 for AI agent-orchestrated workflow for collaborative decision-making, in accordance with an embodiment of the disclosure. As shown in block 302, the process flow includes receiving, using a task orchestration subsystem, an input task comprising a decision objective, one or more associated data references, and an execution graph defining subtasks, agent roles, and coordination logic.

As described herein, the decision objective may represent the primary operational outcome to be achieved by the system, such as generating a creditworthiness analysis, preparing a regulatory memo, or evaluating the risk associated with a financial instrument. The decision objective may be expressed as a natural language instruction, a structured command, or a reference to a predefined workflow template. In some embodiments, the decision objective may be associated with metadata defining required output formats, deadlines, regulatory constraints, or recipient roles (e.g., internal analyst, external auditor).

The data references may include identifiers, URIs, or queries pointing to the data inputs required for task execution. These may correspond to structured datasets (e.g., balance sheets, time series data), semi-structured artifacts (e.g., tables embedded in PDFs), or unstructured documents (e.g., emails, reports, legal filings). Data references may also include preprocessed knowledge artifacts such as entity mappings, annotated corpora, or historical outputs from prior tasks. In some cases, the data references include permissions or access control constraints which are enforced during execution.

The execution graph may be a formal representation of the logical structure and sequencing of subtasks needed to complete the decision objective. Each node in the execution graph represents an individual subtask and is annotated with metadata specifying the agent type responsible for the subtask (e.g., data extraction agent, risk analysis agent, report synthesis agent), required inputs, and expected outputs. Edges between nodes indicate control or data dependencies-i.e., that one subtask must complete before another begins, or that the output of one agent serves as the input to another. The execution graph may include parallel branches, conditional branches (e.g., execution paths triggered only under specific output conditions), and checkpoint nodes where SME input or validation is required. In some implementations, the execution graph is generated dynamically from a higher-level specification or is selected from a repository of task templates maintained by the system.

Upon receipt, the task specification may be parsed and staged for execution by the orchestration subsystem, which then allocates resources, initializes coordination structures, and prepares agent instances in accordance with the graph structure.

As shown in block 304, the process flow includes instantiating, using the collaborative orchestration subsystem, a plurality of AI agents corresponding to the roles defined in the execution graph, wherein each agent is configured to perform a discrete subtask contributing to the overall decision objective.

As described herein, each agent is instantiated in accordance with the role assignments and dependency constraints specified in the task's execution graph. Instantiation may include loading a selected model architecture, provisioning prompt templates or configuration parameters, and establishing communication pathways to relevant data nodes or peer agents. In some embodiments, instantiation also may also include registering the AI agent within a coordination registry or shared task context, allowing it to receive updates on the status of other subtasks.

The AI agent roles may be defined with respect to the execution graph and may include specialized functions such as extracting information from documents, evaluating quantitative risk factors, synthesizing content into decision-ready formats, or validating outputs from upstream agents. Each AI agent may be context-aware, meaning it operates with access to a scoped view of the overall task objective, relevant inputs, and the expected role of its output in downstream decision steps.

In contrast to the lattice structure described elsewhere herein, which may persist as a long-lived computational substrate, the AI agents in this block may be instantiated transiently-i.e., for the duration of a specific task instance-and may be dynamically allocated to available compute resources. In certain implementations, AI agents may also be instantiated in a hierarchical fashion, where a supervisory agent manages a set of subordinate agents assigned to lower-level subtasks.

As shown in block 306, the process flow includes executing, by each instantiated AI agent, a domain-specific subtask in accordance with the execution graph, wherein the subtask is performed using AI agent-specific models, tools, or instructions, and generates an intermediate output that contributes to the resolution of the decision objective.

As described herein, each AI agent may begin execution upon satisfaction of any input or dependency conditions defined in the execution graph. These conditions may include the availability of data inputs, completion of upstream agent outputs, or fulfillment of SME validation checkpoints. The execution may occur asynchronously or in parallel with other agents, subject to system-level coordination policies.

Subtasks may vary in complexity and scope. For example, one agent may be tasked with extracting quantitative metrics from structured financial reports, while another may synthesize unstructured qualitative insights from analyst commentary. Execution typically involves processing input data or context using an underlying AI model-such as a fine-tuned transformer, a prompt-based instruction set, or a hybrid symbolic-neural pipeline. AI agents may also invoke external tools (e.g., document parsers, search APIs, knowledge graphs) to augment or verify outputs.

Intermediate outputs may be generated in a structured format, such as JSON, markdown, or tabular data, and are stored in a shared task memory or published to a coordination queue accessible to downstream agents. Each output may be annotated with metadata identifying the generating agent, associated inputs, timestamps, and confidence scores or evaluation metrics where applicable. In some embodiments, AI agents may include internal error-handling logic, enabling them to retry operations, flag uncertainties, or raise exceptions to the orchestration subsystem when task execution fails or returns ambiguous results.

As shown in block 308, the process flow includes transmitting, using a coordination subsystem, intermediate outputs from one or more AI agents to downstream agents or SMEs, in accordance with the dependencies and routing logic defined in the execution graph.

As described herein, each AI agent's intermediate output is evaluated for downstream utility and transmitted to the next node(s) in the task graph. The routing logic may be based on the structure of the execution graph and may include explicit paths (e.g., Agent A → Agent B), conditional branches (e.g., transmit only if a threshold condition is met), or concurrent broadcasting to multiple recipients. The coordination subsystem handles message queuing, delivery confirmation, and sequencing where necessary.

In some embodiments, intermediate outputs may be transmitted through a shared memory layer, such as a distributed document store or task-specific workspace, with AI agents subscribing to relevant keys or task segments. In other implementations, message passing may occur via an event bus or publish-subscribe infrastructure that decouples agent logic from transport mechanics.

For agent-to-agent transmission, the receiving AI agent may parse the output as input to its own execution process, continuing the chain of processing toward the final decision artifact. For agent-to-SME transmission, the output may be routed to a user interface component configured to render agent outputs for human inspection, validation, or modification, as described in greater detail elsewhere herein.

Routing metadata, such as task identifiers, originating agent identifiers, intended recipients, timestamps, and dependency satisfaction flags, may accompany each transmission to maintain traceability and support synchronization across agents operating concurrently.

In certain embodiments, outputs may be transformed during transmission. For example, an AI agent's raw output may be reformatted, redacted, or summarized before presentation to an SME, or annotated with auxiliary information such as source provenance or confidence levels to support decision-making.

As shown in block 310, the process flow includes receiving, using a user interface subsystem, one or more inputs from an SME, wherein the SME input comprises validation, correction, augmentation, or commentary on intermediate or final outputs generated by AI agents.

As described herein, SME input may be solicited at predefined checkpoints in the execution graph or may be invoked dynamically in response to flagged uncertainties, low-confidence outputs, or conflict detection among agents. The User interface subsystem may present the relevant AI agent-generated content, associated metadata (e.g., source references, agent identity, timestamps), and interactive controls enabling the SME to provide input.

The SME input may take multiple forms such as, validation, correction, augmentation, summary, and/or the like. The SME interface may support granular interaction with structured outputs-such as in-line editing of text, cell-by-cell validation in tabular formats, or toggling of validation flags for specific content segments. In some embodiments, the interface may include visualization tools that display data provenance or inter-agent task dependencies, assisting the SME in understanding how particular outputs were derived.

SME input may be captured and encoded in a structured format, tagged with a user identifier, timestamps, and linkage to the corresponding task and content element. The SME input may be stored in a shared memory or task ledger and may trigger additional workflow activity-such as re-execution of dependent agents, escalation to oversight roles, or logging for audit purposes. In certain configurations, the SME may also override default execution paths by manually adjusting the execution graph (e.g., bypassing a step, inserting a new validation node) or providing direct instructions to downstream agents.

As shown in block 312, the process flow includes updating, using a task state management subsystem, the execution graph and task context in response to SME input or intermediate AI agent outputs, wherein the update may include modifying task flow, triggering additional agents, or adjusting downstream data dependencies.

As described herein, the task state management subsystem may continuously monitor agent results and SME inputs to detect conditions that warrant modifications to the task's operational flow. This dynamic capability allows the system to respond adaptively to evolving information, unexpected conditions, or human intervention.

Updates to the execution graph may include triggering new agents, altering dependencies, bypassing or disabling agents, and/or the like. For example, if an SME adds a new analytical requirement, the system may instantiate a corresponding agent and insert a new node in the execution graph, if a downstream agent was initially dependent on an upstream task that is now invalidated by SME correction, the graph is modified to suspend or reassign the dependent node, or in cases where SME validation deems a step unnecessary, the system may mark that node as completed and skip execution.

Updates to the task context may include appending new data references or annotations based on SME-provided content, changing parameter values affecting how agents interpret their roles or inputs (e.g., a change in regulatory jurisdiction may shift how a compliance agent assesses output), modifying access permissions, e.g., restricting access to sensitive data in response to SME oversight, and/or the like.

In some embodiments, changes to the graph or context are versioned, allowing the system to maintain a complete history of task evolution and enabling rollback if needed. Changes are propagated to affected agents through the coordination and shared memory infrastructure, ensuring consistency and synchronization.

As shown in block 314, the process flow includes aggregating, using a result integration subsystem, validated outputs from multiple agents and SMEs into a unified decision artifact, wherein the artifact is structured according to task specifications and reflects the collaborative contributions of both automated and human participants.

As described herein, the result integration subsystem collects partial outputs and SME inputs from the shared memory or task coordination layer, and assembles them into a final output format specified in the original task definition. This may include structured documents (e.g., credit memos, risk reports, legal summaries), structured data (e.g., key-value pairs or tables), or hybrid formats combining text, figures, and embedded metadata.

The integration process may include, (i) ordering and formatting of individual outputs based on task graph topology or document templates, (ii) deduplication or consolidation of overlapping agent results, particularly in workflows where parallel agents analyze similar inputs, (iii) annotation of each section or component with traceability metadata, including contributing agent identifiers, data provenance, SME revision markers, and timestamps, (iv) validation checks, such as ensuring all required graph nodes have been executed or approved before final compilation, and/or the like.

In some embodiments, the integration process may be partially automated and partially supervised. For example, an integration agent may assemble a draft version of the output, which is then reviewed and finalized by an SME before release. In other cases, output generation is fully autonomous, subject to automated rules derived from prior SME-approved templates.

The final decision artifact may also include structured summaries or confidence indicators, such as risk scores, explanation layers, or logic path visualizations, depending on the requirements of the recipient. Additionally, the artifact may be exported to external systems via API, stored in an audit repository, or made available to downstream business functions.

As shown in block 316, the process flow includes storing, using a task audit subsystem, the completed decision artifact along with associated execution metadata, including agent participation records, SME interactions, data access events, and task graph evolution, to support traceability, auditability, and future reuse.

As described herein, upon completion of the task, the system serializes the decision artifact and all related operational data into a persistent, queryable storage layer. Such storage may be implemented using a document database, an append-only event ledger, or a graph database capturing node-to-node interactions and historical task states.

The stored metadata may include agent execution records specifying which agents were instantiated, their input/output pairs, error flags, and duration of execution, SME interaction logs detailing all validation, corrections, or annotations provided, linked to the specific content elements affected, data access trace identifying what data sources were accessed by which agents, under what conditions, and in what sequence, task graph lineage recording how the execution graph was constructed and modified over the course of execution, including versioned snapshots of all structural changes, and/or the like.

**In** some embodiments, the task audit subsystem may support differential queries, allowing system administrators, auditors, or other stakeholders to compare different executions of the same task template or analyze how SME involvement influenced the final outcome. Where regulatory requirements apply, the audit trail may include cryptographic integrity markers (e.g., hash chains, digital signatures) to support non-repudiation and tamper-evidence.

As shown in block 318, the process flow includes presenting, using a reporting and analytics subsystem, a real-time dashboard or summary view of the decision workflow's execution, enabling stakeholders to monitor task progress, review final outcomes, and assess system performance metrics.

As described herein, the reporting and analytics subsystem may retrieve aggregated data from the task audit subsystem and shared memory, then renders visual summaries and detailed logs of the execution process. These presentations may include real-time progress indicators reflecting the status of active subtasks, pending agent outputs, or ongoing SME validations, visualization of the execution graph showing task dependencies, completed nodes, and any conditional branches that were activated, performance metrics such as execution times, agent efficiency, error rates, and SME intervention statistics, traceability views linking final decision elements to their corresponding provenance records, thereby facilitating audits and compliance reviews, and/or the like.

The reporting and analytics subsystem may output this information in various formats, including interactive web-based dashboards, generated reports, or API-accessible analytics end-points, allowing stakeholders to drill down from high-level summaries to detailed logs, supporting both real-time operational oversight and post-execution review.

It will be understood that the foregoing description of the method 300 and its associated subsystems, components, and process flows is provided for illustrative purposes only. The assignment of distinct functionalities to separate subsystems, such as the collaborative orchestration subsystem, coordination subsystem, User interface subsystem, result integration subsystem, task audit subsystem, and reporting and analytics subsystem, is conceptual and non-limiting. **In** various embodiments, two or more of the described functionalities may be combined into a single subsystem or distributed across multiple subsystems. Furthermore, while the method 300 has been described as proceeding through sequential blocks, the operations described herein may be performed in parallel, in a different order, or omitted altogether depending on system configuration, task complexity, or operational requirements.

Moreover, variations, extensions, and modifications of the disclosed systems and methods are contemplated. For example, the orchestration logic described herein may be implemented in centralized, decentralized, or hybrid architectures; the AI agents may operate synchronously or asynchronously; and different data models, communication protocols, or validation mechanisms may be employed without departing from the spirit and scope of the disclosure. The particular examples provided are illustrative and should not be construed as limiting.

### Example Method for Multi-Agent Coordination and Self-Organization

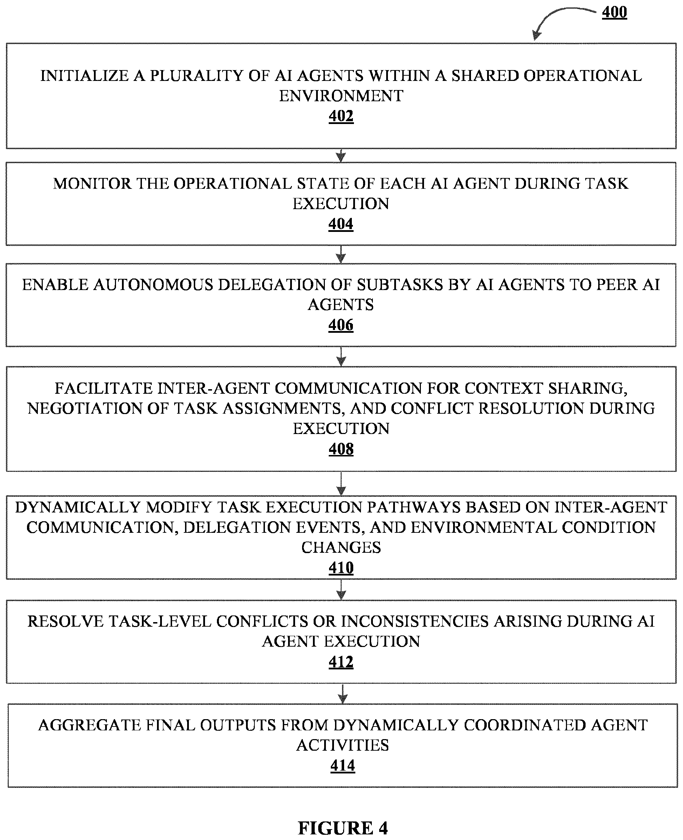

Figure 4 illustrates an example method 400 for multi-agent coordination and self-organization, in accordance with an embodiment of the disclosure. As shown in block 402, the process flow includes initializing, using an orchestration subsystem, a plurality of AI agents within a shared operational environment, wherein each agent is provisioned with an initial task context, available resources, and behavioral policies enabling dynamic delegation, coordination, and task adaptation during execution.

The orchestration subsystem may be configured to instantiate each AI agent with an operational profile that includes information regarding the overarching task objective, environmental conditions, data access permissions, initial assumptions, and interaction protocols. Each AI agent may be configured to interpret this initial profile flexibly rather than following a fixed, pre-assigned sequence of actions. The orchestration subsystem may further define behavioral policies for AI agents, which may specify conditions under which an AI agent may autonomously divide its assigned tasks into subtasks, request assistance from peer agents, or adapt its own processing pathways in response to evolving task conditions or newly available information.

The orchestration subsystem may enable AI agents to exchange messages, share contextual state information, or issue coordination signals without requiring prior explicit dependency mappings. AI agents operating within this environment may independently determine whether to initiate a delegation, accept a delegation, reprioritize their execution queues, or modify their behavior based on real-time evaluation of their internal state, peer communications, or external task context changes. As such, the overall behavior of the system may thus evolve organically as agents react to intermediate results, environmental feedback, or human inputs, while still maintaining alignment with overarching task objectives specified at initialization.

As shown in block 404, the process flow includes monitoring, using the orchestration subsystem, the operational state of each AI agent during task execution, wherein the operational state may include task progress, resource utilization, interaction requests, and environmental condition changes.

The orchestration subsystem may continuously or periodically collect status information from each AI agent operating within the environment. An AI agent's operational state may reflect its current task status (e.g., active, waiting for input, completed, failed), resource status (e.g., memory or compute usage levels), and interaction signals (e.g., a request for delegation, an offer to support another agent, or a notification of an encountered anomaly). The orchestration subsystem may also monitor external environmental parameters, such as updates to data sources, changes in task constraints, or SME interventions that may affect agent behavior. Such monitoring may be implemented through lightweight telemetry signals embedded within the agent execution cycle, asynchronous heartbeat messages, or on-demand state queries initiated by the orchestration subsystem. In some embodiments, AI agents may be required to report their status at predefined task milestones, while in other embodiments, agents may autonomously decide when to transmit relevant status updates based on internal policies or detected conditions.

The information gathered through this monitoring process may be used by the orchestration subsystem to maintain a real-time system view of agent activity and task evolution.

As shown in block 406, the process flow includes enabling, using the orchestration subsystem, autonomous delegation of subtasks by AI agents to peer AI agents based on task complexity, agent capability, workload balancing, or changing task conditions.

During task execution, an AI agent may encounter a subtask or operational need that exceeds its assigned scope, lies outside its capability set, or benefits from parallel execution to improve overall workflow efficiency. In such cases, the AI agent may autonomously generate a delegation request directed to other available agents within the operational environment. The delegation request may include a description of the subtask, any input data already available, required outputs, and optional execution parameters or constraints.

The orchestration subsystem may facilitate this delegation by advertising available AI agents' capabilities, managing communication channels for delegation requests and acceptances, and enforcing any policy rules governing permissible delegations. In some embodiments, AI agents may broadcast delegation requests to a group of candidate peers, allowing capable agents to self-select for task acceptance based on current load, specialization, or other internal prioritization criteria. In other embodiments, delegation may be routed through the orchestration subsystem, which may assign subtasks to optimal AI agents based on global system awareness.

Upon successful delegation, the AI agent receiving the subtask may instantiate a new execution thread, update the shared task context with progress indicators, and optionally send intermediate or final results back to the delegating AI agent or to the broader task memory for use by other AI agents. Delegation transactions may be logged for traceability, including records of subtask ownership, completion status, and any issues encountered during execution.

As shown in block 408, the process flow includes facilitating, using the orchestration subsystem, inter-agent communication for context sharing, negotiation of task assignments, and conflict resolution during execution.

During dynamic coordination, AI agents may need to exchange information beyond delegation requests. AI agents may communicate intermediate outputs, task status updates, contextual metadata, or negotiation messages relating to the division or prioritization of work. Communication may occur through structured message formats, shared memory writes, or publish-subscribe mechanisms configured and managed by the orchestration subsystem.

Context sharing may involve transmitting partial task results, updated environmental conditions, or warnings about detected anomalies, allowing AI agents to maintain a coherent, system-wide understanding of the task space. Negotiation of task assignments may occur when multiple AI agents recognize overlapping responsibilities or when resource optimization is necessary; AI agents may exchange proposals, counterproposals, or consensus signals to allocate work effectively among themselves.

Conflict resolution mechanisms may also be implemented to address situations where agents produce divergent outputs, propose incompatible task plans, or compete for limited system resources. Resolution methods may include simple priority-based arbitration, majority voting among a group of AI agents, or escalation of the conflict to a supervisory logic layer managed by the orchestration subsystem. In some embodiments, AI agents may be equipped with local decision rules to resolve low-level conflicts autonomously, while system-wide conflicts may be escalated for coordinated resolution.

The inter-agent communication may occur asynchronously, allowing AI agents to act independently while still maintaining a degree of consistency and responsiveness within the broader execution environment. Communication events may be logged to preserve traceability and allow post-task auditing of collaborative interactions.

As shown in block 410, the process flow includes dynamically modifying, using the orchestration subsystem, task execution pathways based on inter-agent communication, delegation events, and environmental condition changes.

During execution, as AI agents communicate intermediate results, delegate subtasks, or encounter new data, the orchestration subsystem may update the operational structure of the task in real time. These updates may include creating new task dependencies, altering execution sequences, reassigning work among agents, or suspending or terminating certain task branches that are no longer relevant. For example, if an AI agent determines that new risk factors have emerged in a financial analysis task, the orchestration subsystem may initiate additional subtasks directed to specialized AI agents capable of evaluating those risks, thereby expanding the execution graph dynamically. Similarly, if an upstream AI agent's output invalidates the need for a downstream operation, the corresponding task node may be deactivated to conserve resources and maintain focus on the remaining relevant objectives.

Environmental condition changes, such as updates to data sources, SME interventions, or detected anomalies in the operational environment, may also trigger dynamic modification. The orchestration subsystem may continuously evaluate AI agent status reports and external signals to determine whether adjustments to task structure are appropriate, thereby allowing the system to remain aligned with real-world conditions as they evolve.

**In** some embodiments, task modifications may be provisional, allowing for rollback if subsequent information invalidates an earlier decision. Task updates may be versioned and logged for auditability, ensuring that the history of dynamic adaptations remains available for review.

As shown in block 412, the process flow includes resolving, using the orchestration subsystem, task-level conflicts or inconsistencies arising during AI agent execution through structured arbitration mechanisms or escalation protocols.

During dynamic multi-agent execution, conflicts may arise when agents produce contradictory outputs, propose incompatible action plans, or compete for limited system resources. To maintain coherence and progress toward the decision objective, the orchestration subsystem may implement structured conflict resolution procedures.

In some embodiments, conflict resolution may occur through arbitration mechanisms such as consensus models, where multiple agents provide candidate outputs or recommendations and a majority or weighted scoring system selects the prevailing result. In other embodiments, a specialized arbitration agent or logic module may be instantiated to evaluate the competing outputs using defined criteria such as relevance, confidence scores, historical performance, or SME-defined preferences.

Where conflicts cannot be resolved autonomously by the AI agents themselves, the orchestration subsystem may initiate escalation protocols. Escalation may involve presenting the conflict and associated evidence to a supervisory agent, a higher-order orchestration layer, or directly to a human SME for review and decision-making. The escalation process may be configurable based on task criticality, agent authority levels, or system-wide operational policies. In some cases, resolution may involve merging multiple conflicting outputs, generating an annotated report for SME review, or triggering a re-execution of certain subtasks under revised assumptions or additional constraints. All conflict occurrences, attempted resolutions, and escalation paths may be logged for transparency and auditability.

As shown in block 414, the process flow includes aggregating, using the orchestration subsystem, final outputs from dynamically coordinated agent activities, wherein the outputs reflect real-time adaptations, delegations, and conflict resolutions that occurred during task execution.

Upon completion of agent interactions, delegated tasks, and conflict resolution activities, the orchestration subsystem may collect intermediate and final outputs generated throughout the execution process. These outputs may originate from multiple AI agents operating asynchronously and may have been modified or augmented based on environmental feedback, SME interventions, or internal agent negotiations.

The orchestration subsystem may perform synthesis by aggregating these outputs into a coherent structure, preserving the logical relationships and provenance of each contributing result. The synthesis process may involve aligning outputs to the original task objectives, reconciling any changes made during execution, and ensuring consistency across various subtask results. In some embodiments, the engine may normalize differing output formats, normalize terminology or numerical conventions, and annotate any outputs where adaptation or escalation occurred. Where multiple candidate outputs exist for a given subtask, the orchestration subsystem may apply selection rules or composite aggregation methods, such as weighted averaging, conditional acceptance based on provenance scores, or SME-approved preferences. Additionally, synthesized outputs may include embedded metadata indicating how dynamic adaptations-such as delegation events or modified execution pathways-shaped the final result. The synthesized output may then be staged for SME review, external system integration, or archival depending on the operational requirements defined at task initiation.

In some embodiments, upon aggregating the final outputs from the coordinated agent activities, the system may record, using an execution ledger, a complete history of agent interactions, delegation events, conflict resolutions, task adaptations, and final output synthesis to support traceability, auditability, and system performance evaluation. The dynamic execution ledger may function as an append-only data structure or a distributed event log that captures the lifecycle of the task as it unfolds across multiple agents. Each recorded event may include a timestamp, agent identifiers, the nature of the event (e.g., delegation request, context update, task reassignment, conflict escalation, resolution outcome), relevant data payloads, and links to preceding and subsequent events to preserve causality chains. The execution ledger may further support analytic functions, such as calculating agent collaboration efficiency, identifying frequent conflict patterns, assessing the performance of delegation strategies, or evaluating the responsiveness of the system to environmental changes. In regulated or high-compliance environments, the ledger may incorporate cryptographic verification methods, such as chained hashes or digital signatures, to ensure that records are tamper-evident and satisfy audit requirements.

It will be understood that the foregoing description of method 400 and the associated subsystems, orchestration subsystem operations, agent behaviors, and process flows is provided for illustrative purposes only. The particular assignment of functionalities to different AI agents, the ordering of steps, and the subdivision of orchestration activities into discrete blocks are conceptual and non-limiting. In various embodiments, the described operations may be performed by fewer AI agents, combined within single modules, or distributed differently among system components depending on implementation requirements. Moreover, the sequencing of process steps may vary, steps may be performed in parallel, omitted, or supplemented, and the overall task execution pathways may differ without departing from the underlying principles disclosed herein.

Furthermore, the architectures, mechanisms, and coordination strategies described herein may be implemented using centralized, decentralized, or hybrid models depending on operational conditions, resource availability, or task complexity. Variations, modifications, and enhancements of the disclosed methods-such as alternative delegation policies, conflict resolution models, agent interaction protocols, or execution ledger implementations-are contemplated within the scope of the disclosure.

### Example Real-Time Dashboard Aggregation from Distributed AI Agent Outputs

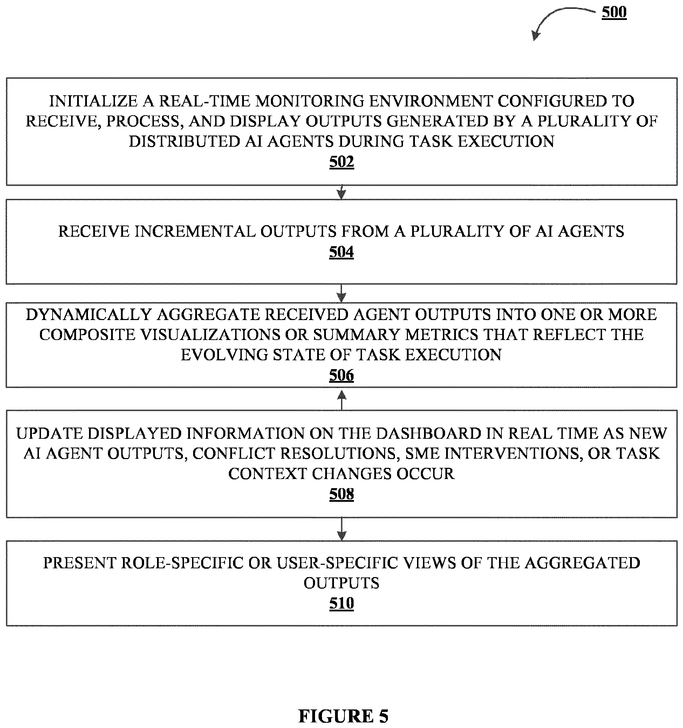

Figure 5 illustrates an example method 500 for real-time dashboard aggregation from distributed AI agent outputs, in accordance with an embodiment of the disclosure. As shown in block 502, the process flow includes initializing, using a dashboard aggregation subsystem, a real-time monitoring environment configured to receive, process, and display outputs generated by a plurality of distributed AI agents during task execution.

The dashboard aggregation subsystem may establish a set of communication channels or data streams through which AI agent outputs, task state updates, and contextual metadata are transmitted to a centralized or distributed dashboard interface. Initialization of the monitoring environment may involve configuring routing rules for agent outputs, defining data schemas for display components, and setting parameters for update frequency, priority levels, or user role-specific views. The dashboard aggregation subsystem may allocate distinct interface regions for different categories of information, such as raw agent outputs, synthesized decision summaries, task state indicators, and SME feedback fields. In some embodiments, initialization may include binding AI agent identity metadata to visual display elements, allowing outputs from specific agents to be tracked independently or grouped dynamically based on task phase or functional area.

During initialization, the engine may also register event listeners or triggers associated with task execution events, such that updates are automatically propagated to the dashboard upon completion of subtasks, detection of conflicts, receipt of SME input, or resolution of dynamic adaptations. These mechanisms may allow the dashboard to maintain real-time responsiveness without requiring full task completion before presenting intermediate results to users.

As shown in block 504, the process flow includes receiving, using the dashboard aggregation subsystem, incremental outputs from a plurality of AI agents, wherein each output is associated with metadata identifying its origin, task context, completion state, and confidence or validation status.

During execution, as each AI agent may complete a portion of its assigned task or generate an intermediate result, the output may be transmitted to the dashboard aggregation subsystem in an incremental, asynchronous manner. Outputs may include structured data, narrative text, risk scores, visualizations, or extracted entities, depending on the nature of the agent's role. Each output received by the dashboard aggregation subsystem may be accompanied by metadata indicating the identity of the generating agent, the time of generation, a unique task segment identifier, any associated provenance information, a confidence score if generated by an AI agent employing probabilistic reasoning, and an optional validation status reflecting SME review or peer agent confirmation.

In some embodiments, the dashboard aggregation subsystem may apply preliminary validation or formatting rules to received outputs, such as ensuring conformance with expected data schemas, normalizing units of measure, or appending tags for unresolved or partially complete results. The system may be configured to handle outputs arriving out of order, buffering or sequencing them appropriately before presentation.

As shown in block 506, the process flow includes dynamically aggregating, using the dashboard aggregation subsystem, received agent outputs into one or more composite visualizations or summary metrics that reflect the evolving state of task execution.

Upon receiving incremental outputs from AI agents, the dashboard aggregation subsystem may process the outputs to generate aggregated visual or analytical representations. Aggregation may involve combining outputs from multiple AI agents addressing related subtasks, synthesizing data points into trend lines or key performance indicators, or assembling intermediate results into partially completed decision artifacts. The aggregation process may apply predefined templates or dynamic rules that dictate how individual AI agent outputs are grouped, prioritized, or weighted. For example, outputs relating to financial analysis may be consolidated into a cumulative risk profile, while outputs concerning document parsing may be assembled into a searchable document map. In some embodiments, aggregation may include confidence-based weighting, where outputs with higher confidence scores are given greater influence over summary representations.

The dashboard aggregation subsystem may continuously update visualizations as new outputs arrive, adjusting existing summaries, adding new sections, or highlighting changed metrics. Such a dynamic updating allows users to view an evolving composite picture of the task without requiring manual refreshing or intervention. In certain embodiments, aggregation logic may be role-sensitive, such that different user types (e.g., analysts, managers, auditors) are presented with different levels of detail, aggregation granularity, or emphasis on particular task dimensions.

As shown in block 508, the process flow includes updating, using the dashboard aggregation subsystem, displayed information on the dashboard in real time as new AI agent outputs, conflict resolutions, SME interventions, or task context changes occur.

As execution progresses, the dashboard aggregation subsystem may receive continuous streams of new data resulting from agent activity, coordination events, or human interactions. In response, the dashboard aggregation subsystem may dynamically update the displayed dashboard content without requiring a full refresh or manual reload. Updates may include modifications to individual data fields, regeneration of visual summaries, addition or removal of dashboard sections, or updating task status indicators. The dashboard aggregation subsystem may detect relevant update events through monitoring of shared memory structures, receipt of event notifications, or polling of execution state monitors. When an update is triggered, the dashboard aggregation subsystem may selectively re-render only those portions of the dashboard that are affected, preserving interface performance and minimizing visual disruption to users.

In some embodiments, the system may prioritize updates based on urgency or user relevance. For example, conflict resolutions or SME overrides may be highlighted or surfaced prominently, while minor status changes may be updated quietly. Role-based filtering may further tailor which updates are pushed to which users, ensuring that each user view remains contextually appropriate. The real-time updating mechanism may support smooth visual transitions, incremental progress bars, or notification banners to signal evolving task states. Historical views or versioning features may be maintained to allow users to review prior dashboard states if necessary.

As shown in block 510, the process flow includes presenting, using the dashboard aggregation subsystem, role-specific or user-specific views of the aggregated outputs, wherein the content, level of detail, and presentation format are adapted based on user role, task responsibilities, or access privileges.

In some embodiments, the dashboard aggregation subsystem may associate each user session with a specific role profile, such as analyst, manager, compliance officer, auditor, or SME reviewer. Based on this profile, the system may dynamically filter, format, and prioritize dashboard content to match the user's responsibilities and decision-making needs. For example, an analyst may be presented with detailed agent outputs, intermediate calculations, and task-level performance metrics necessary for granular evaluation. In contrast, a manager may receive a summarized view highlighting key risk factors, open decision points, and overall task progress indicators. An auditor may be provided access to full provenance data, conflict resolution logs, and escalation records to support compliance verification.

Role-specific views may differ not only in the amount and type of content displayed but also in visual styling, interaction affordances (e.g., editing permissions, validation controls), and update frequency. Access control mechanisms may further restrict sensitive outputs to users with appropriate privileges, ensuring information security and regulatory compliance. In some embodiments, users may customize or override default views within permitted boundaries, allowing them to configure dashboards to emphasize particular data streams, task sections, or operational metrics relevant to their functions.

In some embodiments, throughout the lifecycle of the dashboard, each event that alters the displayed information-whether triggered by new agent outputs, task state changes, conflict resolutions, or SME interventions-may be logged in a structured audit record. Similarly, user interactions with the dashboard, including validations, annotations, view changes, or navigation among different task sections, may be recorded with associated timestamps, user identifiers, and relevant contextual metadata. The logging system may capture not only the content of updates but also the sequence and timing of their presentation to various users, preserving a comprehensive historical view of how the decision artifact evolved in real time. In some embodiments, the logs may differentiate between passive updates (e.g., system-driven data refreshes) and active user-driven events (e.g., task approvals, content edits), allowing for granular reconstruction of decision-making workflows.

Audit logs may be stored in a secure, tamper-evident repository, and may be linked to the broader task execution ledger described elsewhere herein, enabling unified analysis of both system-side processing and user-facing presentation layers. In regulatory environments, the logs may support compliance verification, traceability requirements, or post-execution forensic analysis.

It will be understood that the foregoing description of method 500 and the associated dashboard aggregation subsystem, communication mechanisms, user interfaces, and audit logging processes is provided for illustrative purposes only. The division of functionality among distinct modules, the assignment of operations to separate blocks, and the specific ordering of process steps are conceptual and non-limiting. In various embodiments, dashboard updates, aggregation operations, user role handling, and logging activities may be implemented in different combinations, orders, or configurations depending on system architecture, performance requirements, or user preferences. Furthermore, operations described as occurring sequentially may instead occur concurrently or in different sequences without departing from the scope of the present disclosure.

Moreover, variations, extensions, and modifications of the disclosed methods are contemplated. For example, the dashboard aggregation subsystem may operate in a centralized, decentralized, or distributed environment; role-specific views may be determined dynamically or based on static assignments; and aggregation logic may employ alternative techniques such as machine learning-based summarization or predictive update models. Alternative data models, visualization formats, access control frameworks, and logging mechanisms may likewise be employed.

In an illustrative embodiment, the system described herein may be applied to the task of automated loan structuring in the context of a commercial loan approval workflow, such as for the financing of an LNG tanker. Upon initiation, a task specification corresponding to the loan application is received by the orchestration subsystem, defining the objective of generating a recommended loan structure based on a combination of compliance analysis, financial risk evaluation, and market condition assessment.

Multiple AI agents are instantiated within the lattice structure, each assigned to perform discrete subtasks. A compliance evaluation agent may assess the borrower's regulatory adherence by analyzing jurisdictional data, vessel registry compliance, and environmental certifications. In parallel, a financial risk agent may extract and interpret borrower financial statements, performing ratio analysis and historical trend evaluation. Additional AI agents may be responsible for aggregating external market intelligence, such as vessel valuation indices, charter rates, and macroeconomic factors relevant to shipping finance.

As AI agents complete their subtasks, outputs are dynamically propagated through the lattice, and intermediate risk classifications are generated. The orchestration subsystem monitors AI agent outputs, facilitating task delegation and reallocation where needed, for example, by invoking additional due diligence agents if risk scores exceed predefined thresholds. Based on the combined outputs, a risk profiling agent synthesizes a global risk classification for the loan application, categorizing it into a predefined risk tier (e.g., high, moderate, low).

The system may then employ an automated structuring agent which, informed by the final risk tier and supporting agent outputs, generates a recommended loan structure. For example, a low-risk classification may trigger recommendations for standard interest rates and conventional tenures, while a high-risk classification may result in suggested adjustments such as increased collateral requirements, reduced loan-to-value ratios, shortened tenures, or the inclusion of covenant protections. These recommendations are formatted and presented on a real-time dashboard accessible to credit officers and risk committee members.

SMEs may interact with the dashboard to validate, modify, or approve the proposed structuring terms. Their feedback, as well as any manual adjustments, are captured through the User interface subsystem and logged via the provenance tracking system, ensuring traceability of all final decision elements. The completed loan structuring recommendation, including both agent-driven outputs and SME interventions, is then stored in the system ledger for auditability and further business processing.

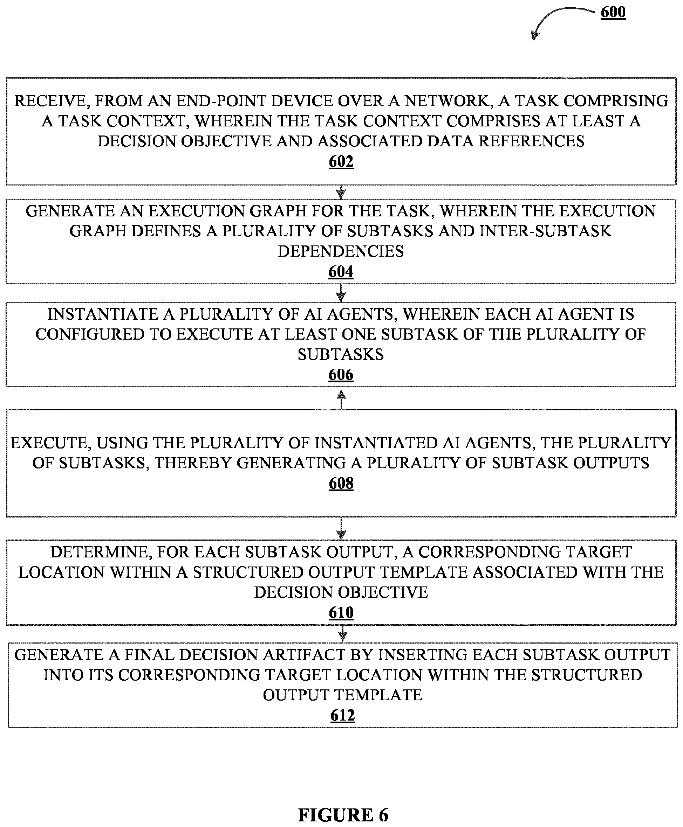

Figure 6 illustrates a process flow 600 for orchestrating the execution of interdependent decision-making subtasks by a plurality of AI agents, in accordance with an embodiment of the disclosure.

As shown in block 602, the process flow includes receiving, from an end-point device over a network, a task comprising a task context, wherein the task context comprises at least a decision objective and associated data references. The task may be initiated by a system within a financial institution responsible for preparing structured regulatory submissions or other compliance-driven outputs. Examples of such systems include internal orchestration platforms, compliance dashboards, regulatory pipeline tools, or automated scheduling engines. Transmission of the task from the end-point device may occur over a secure transport protocol, such as HTTPS with mTLS authentication, or via an enterprise message bus using authenticated messaging formats like AMQP or Kafka. In some embodiments, the task is encapsulated in a signed payload containing serialized metadata, a task type identifier, and references to supporting data systems.

The task context may include a structured digital representation of the decision objective. In financial compliance applications, this decision objective often corresponds to a regulatory deliverable governed by external standards such as Basel III, CRR/CRD, IFRS 9, or internal audit control frameworks. The task context may express this objective in a domain-specific schema, such as a JSON-based template or XML specification, which captures the target data structure, its dimensional hierarchy, inter-field dependencies, required value formats, and applicable transformation logic. For example, a decision objective may require completing a liquidity coverage ratio (LCR) template by computing specified row-column intersections based on tiered capital classifications, asset encumbrances, and counterparty risk weights.

Associated with the decision objective are data references that identify the raw or intermediate data needed to satisfy the required output. These data references may include cataloged links to enterprise data lakes, secure database tables, API endpoints, object storage paths, or ETL pipeline outputs. Each reference may be represented using a URI or internal identifier, and may include metadata such as source system, data version, update timestamp, expected data shape, jurisdiction tag, or classification label (e.g., confidential, restricted, public). In some implementations, the system maintains a data reference resolver that maps logical references to physical locations at runtime, optionally applying access scoping or partition resolution based on attributes of the requesting agent or subtask.

The task context may additionally include execution constraints that influence how the task will be processed. These constraints may define limitations on data access scope, for example, by user role, region, or confidentiality tier. Other constraints may specify that certain values must be reviewed or confirmed by a subject matter expert before they are accepted for downstream use. Jurisdiction-specific logic may also be embedded into the task context, for instance requiring different calculation methods for EU-based versus U.S.-based submissions. Temporal constraints may include task-level service-level objectives (SLOs), soft or hard deadlines, and temporal validity windows for input data. These constraints are preserved and carried forward through execution graph generation and agent scoping stages.

Once received, the task is registered within the system along with its task context and metadata. A unique task identifier may be generated and bound to this instance. The identifier may be propagated throughout the lifecycle of the task, linking the received context with all subsequently generated execution artifacts, including execution graphs, scoped contexts, intermediate outputs, agent logs, and the final structured output. This identifier may support traceability, auditability, and reproducibility by enabling post hoc reconstruction of task history and processing lineage.

As shown in block 604, the process flow includes generating an execution graph for the task, wherein the execution graph defines a plurality of subtasks and inter-subtask dependencies. The system may generate the execution graph in response to the received task context by invoking a graph construction module that parses the decision objective and decomposes it into constituent functional operations. Each subtask may represent a bounded unit of decision logic, transformation, classification, or computation necessary to fulfill a portion of the objective.

The graph construction process may begin by traversing the structured definition of the decision objective, identifying discrete processing segments based on semantic labels, field-level dependencies, calculation chains, or logical sections of the structured output template. In the context of a financial institution, this could involve recognizing that a liquidity template includes sections for high-quality liquid assets (HQLA), cash inflows, and cash outflows, each requiring independent processing pipelines with downstream aggregation points.

Each subtask is represented as a node in the execution graph and is associated with metadata that defines its role and operational constraints. This metadata may include required input types, expected output format, dependency markers, required transformation functions, and fallback logic to apply in the event of execution failure or degraded input quality. Subtask nodes may also include routing logic for downstream data consumers, indicators for parallel execution eligibility, and flags for whether SME validation is required post-execution.

The graph construction module evaluates not only the structural decomposition of the objective but also the contextual and dependency constraints. For example, if a downstream subtask relies on the output of an upstream risk classification model, the system encodes this relationship as a directed edge in the execution graph. Dependencies may be derived from explicit schema references, such as "field X depends on value Y," or inferred from domain models or prior executions. In some embodiments, the graph includes conditional edges representing execution paths based on the presence or quality of upstream results.

The system may represent the execution graph as a directed acyclic graph (DAG) data structure, where each node corresponds to a subtask and each directed edge represents a required dependency. The DAG structure supports efficient scheduling, parallelization of independent subtasks, and dynamic graph traversal strategies. The system may store the graph in a queryable format such as GraphQL, a custom DSL, or as a JSON-LD structure that links directly to agent registry entries, data references, and output bindings.

In some configurations, the system supports dynamic modification of the execution graph at runtime. For instance, the execution graph may be updated to add corrective subtasks in response to SME input, to reroute execution paths when agents return low-confidence outputs, or to bypass sections where input data is unavailable, allowing for context-aware execution flows that adapt to both input conditions and intermediate results without restarting the entire process.

As shown in block 606, the process flow includes instantiating a plurality of AI agents, wherein each AI agent is configured to execute at least one subtask of the plurality of subtasks. Each AI agent may be instantiated as a logical process, containerized runtime, or isolated execution thread within a distributed orchestration environment. Agent instantiation may be coordinated by an agent manager module, which consults an agent template registry to select and provision agent types based on the functional characteristics of the assigned subtask.

Each agent template may include a role definition, supported model architectures, tool and API integration configurations, and protocol bindings required for execution. The instantiation process may also provision supporting infrastructure for the agent, such as a memory buffer for intermediate reasoning, temporary storage for retrieved data, or communication channels for inter-agent messaging. In some implementations, the system instantiates AI agents as containerized microservices in a Kubernetes cluster, with role-specific service accounts used to scope network and data access.

For each instantiated AI agent, the system may dynamically generate a scoped task context corresponding to the assigned subtask. This scoped task context represents a filtered, role-specific view of the global task context, tailored to the information necessary for the agent to complete its assignment. The system may generate the scoped task context by extracting relevant portions of the decision objective, applicable execution constraints, linked data references, and any intermediate outputs produced by upstream subtasks. Scoped context generation may include semantic filtering, dependency resolution, and context shaping based on agent capability. For instance, if a subtask requires calculating a weighted capital ratio using data from multiple sources, the scoped context may include only the data references related to those sources, the computation specification, relevant jurisdictional rules, and a list of acceptable output types. In embodiments where the AI agent has language model capabilities, the scoped context may be structured as a prompt-template with embedded JSON or structured instructions.

Once a scoped context is prepared, the system may perform data access authorization using the scoped task context as a boundary. The authorization process may enforce fine-grained policies such as attribute-based access control (ABAC), evaluating subtask identity, AI agent role, data classification, jurisdiction, and task-level constraints. The system may issue scoped access tokens or temporary credentials allowing the agent to retrieve only the minimum data necessary to perform the subtask, thereby minimizing risk exposure and ensuring compliance with internal and external governance requirements.

In some embodiments, the system may log the scope of access granted to each AI agent, enabling post-execution traceability of what data was accessed, when, and by which AI agent. The system may also inject monitoring hooks or runtime guards into each agent container, allowing for real-time telemetry, anomaly detection, or early termination if access or output behavior violates task policy.

As shown in block 608, the process flow includes executing, using the plurality of instantiated AI agents, the plurality of subtasks, thereby generating a plurality of subtask outputs. Each AI agent, upon receiving its scoped task context and the necessary access credentials, begins execution in accordance with its configured role, capabilities, and execution policy.

The execution process may involve applying a trained machine learning model, such as a large language model, probabilistic inference engine, rule-based expert system, or neural-symbolic hybrid, to the scoped task context and retrieved data. In some embodiments, the machine learning model may be parameterized in real time using structured context prompts or dynamic tool bindings. The AI agent may run the model in one or more stages, optionally leveraging a chain-of-thought reasoning protocol, whereby multiple sequential inference steps are taken, each conditioned on intermediate results and persisted agent memory state.

For example, a subtask requiring asset classification may involve first retrieving counterparty-level data, then applying risk-weighting logic based on jurisdiction-specific thresholds, and finally generating structured output in accordance with a regulatory taxonomy. In such cases, execution may involve alternating between deterministic logic, probabilistic inference, and semantic interpretation steps.

Execution may also involve tool calling or API orchestration, where the agent uses external systems, such as financial calculation engines, document parsers, or knowledge base interfaces, to perform portions of its subtask. Tool selection may be context-driven and dynamically configured at runtime via AI agent templates or task policies.

Each AI agent may maintain an internal execution state, which may include intermediate outputs not yet finalized, received inter-agent messages, the current evaluation path through the subtask logic, retry counters or fallback triggers in the event of incomplete or ambiguous results, and/or the like. If the scoped task context references outputs from upstream subtasks, the AI agent may delay execution until dependencies are resolved. This coordination may be governed by the execution graph and may be enforced via a task scheduler that activates agents only when prerequisite conditions are satisfied.

The output of each subtask may include a structured value, a field set, or a full sub-template, depending on the scope of the assigned operation. In addition to raw output values, the system may record metadata such as agent identifier, confidence score, source data lineage, model version or execution hash, execution timestamp, any SME validation requirements triggered by the result, and/or the like. These outputs may be stored in a task-scoped data structure that supports subsequent retrieval, validation, and insertion into the structured output template.

As shown in block 610, the process flow includes determining, for each subtask output, a corresponding target location within a structured output template associated with the decision objective. Here, each subtask's result may be mapped into a specific location within a multidimensional data structure that reflects the intended output schema. In financial compliance applications, such a structure may correspond to a regulatory reporting template, risk disclosure model, internal decision matrix composed of labeled fields, interrelated data dimensions, or hierarchical aggregation paths, and/or the like.

The mapping process may be performed by a data placement engine configured to compute target locations for subtask outputs within a structured output template, based on multiple contextual and execution-time signals. The data placement engine may consume both the scoped task context associated with each subtask and a structural representation of the output template, which may be defined as a machine-readable schema containing field-level descriptors, nested regions, expected data types, and placement constraints. To compute the appropriate placement, the data placement engine may evaluate a combination of inputs, including semantic identifiers embedded within the scoped task context (such as canonical field labels, regulatory ontology tags, and hierarchical domain anchors), positional metadata emitted during subtask execution (including explicit row and column coordinates, hierarchical field lineage, execution trace markers, or template-relative references), and inter-subtask dependencies encoded in the execution graph.

The placement engine may apply multiple resolution strategies in tandem, including rule-based matching (e.g., hard-coded field-to-output rules derived from template specifications), semantic similarity scoring using vector embeddings (e.g., comparing subtask output descriptors against annotated schema embeddings), and execution graph-aware heuristics (e.g., placing outputs downstream of their dependencies in logically grouped template sections). Template-specific binding rules may be retrieved from a centralized template registry and applied dynamically depending on the task type, jurisdiction, or version. These binding rules may include priority orderings, exclusion lists, disambiguation logic for overlapping terms, or transformation scripts to normalize output shapes before insertion.

In some embodiments, the data placement engine may also consider task-specific constraints or overrides provided in the scoped task context, such as mandated insertion points, conditional placement logic, or explicit exclusions. The data placement engine may compute and store a placement trace for each mapping decision, which includes not only the resolved target location but also the reasoning path, rule sources, and fallback mechanisms invoked during resolution. This trace may be attached to the subtask output metadata to support downstream validation, troubleshooting, and audit logging. The final placement result may be a deterministic binding between a subtask output and a unique insertion coordinate within the structured output template.

In some implementations, the structured output template may be defined by a machine-readable schema that encodes each field's expected data type, contextual scope, and placement constraints. Each subtask output may be matched against this schema to identify valid insertion points. Where ambiguity arises, such as multiple candidate fields satisfying the same semantic criteria, the system may resolve the placement using priority rules, agent confidence scores, or predefined override configurations included in the scoped task context.

The mapping logic may also account for inter-field dependencies and ordering constraints. For example, the system may defer placement of a derived metric until all of its component fields are populated and validated. In cases where two or more subtasks contribute jointly to a composite structure, such as a multidimensional breakdown of a capital reserve requirement, the system may merge their outputs into a shared target region using aggregation logic specified in the decision objective or inherited from the execution graph.

The resulting mapping produces a deterministic assignment between each subtask output and a field or node in the structured output template. This association is stored as metadata for downstream auditability and for ensuring that future task re-executions can replicate or trace the same placement behavior. In some configurations, the mapping process also generates placeholder annotations or confidence flags indicating whether the placement is provisional, complete, or subject to SME review.

As shown in block 612, the process flow includes generating a final decision artifact by inserting each subtask output into its corresponding target location within the structured output template. The system may perform the insertion process using a schema-aware synthesis module that merges subtask outputs into the output template while preserving the structural and semantic integrity of the template. Each subtask output, having been mapped to a specific coordinate or field location during the placement stage, may be inserted at its designated position. The insertion module ensures that the format, data type, and constraints of the receiving field match the attributes of the output being applied. If the output requires transformation, such as data type casting, decimal normalization, or unit harmonization, the module may invoke lightweight post-processing routines to reconcile output format with template expectations.

In embodiments where the structured output template includes nested dimensions, field groupings, or hierarchical schemas, the synthesis process traverses the template recursively, applying each insertion to the appropriate node based on the placement map. During this process, the system may validate that all required fields are populated, that mutually exclusive fields are not simultaneously present, and that dependent fields respect any ordering or validation constraints defined in the template schema.

The system may also enforce completeness and integrity rules at the template level. For example, prior to finalizing the artifact, the system may verify that all mandatory template regions have received data, that inter-field dependency constraints have been satisfied, and that no conflicting outputs have been inserted from overlapping subtasks. These integrity checks may include structural validation, cross-field computation (e.g., summation or reconciliation), and context-aware policy checks inherited from the task context.

Once fully synthesized, the decision artifact may be encapsulated in a structured format such as JSON, XML, or a template-specific serialization (e.g., XBRL or SDMX for regulatory reporting). This artifact may serve as the finalized output of the task, suitable for downstream consumption by human reviewers, automated validators, or submission pipelines. In some implementations, the system may append execution metadata to the artifact, such as task ID, agent provenance chains, insertion traces, and validation outcomes, thereby supporting end-to-end traceability.

If specified by the task context or policy framework, the system may transmit the final decision artifact to a designated SME system for review or approval, or directly to the originating endpoint or an external compliance gateway for further processing or submission.

Although the process flows, system architecture, and specific implementation details described above reference regulatory compliance tasks within financial institutions, the disclosed techniques are not limited to such use cases. The described system and method may be adapted to any domain requiring structured execution of interdependent decision-making subtasks, including but not limited to healthcare reporting, supply chain logistics, legal document assembly, or technical audit workflows. Similarly, while certain embodiments leverage AI agents, execution graphs, or structured templates, alternative implementations may employ other forms of automated task orchestration, data transformation, or decision artifact generation. Unless explicitly stated otherwise, the components and sequences disclosed herein are illustrative and non-limiting, and variations may be made in form, function, logic, or implementation detail without departing from the scope of the disclosure as defined by the appended claims.

Embodiments of the present disclosure are described below with reference to block diagrams and flowchart illustrations. Thus, it should be understood that each block of the block diagrams and flowchart illustrations may be implemented in the form of a computer program product; an entirely hardware embodiment; an entirely firmware embodiment; a combination of hardware, computer program products, and/or firmware; and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some exemplary embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flowchart illustrations. Accordingly, the block diagrams and flowchart illustrations support various combinations of embodiments for performing the specified instructions, operations, or steps.

Many modifications and other embodiments of the present disclosure set forth herein will come to mind to one skilled in the art to which these embodiments pertain having the benefit of the teachings presented in the foregoing descriptions and the associated drawings. Although the figures only show certain components of the methods and systems described herein, it is understood that various other components may also be part of the disclosures herein. In addition, the methods described above may include fewer steps in some cases, while in other cases the methods may include additional steps. The steps of the methods and modifications to the steps of the methods described above, in some cases, may be performed in any order and in any combination.

Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

The following clauses provide optional features of the invention that may be combined with any of the features mentioned above, in any combination.
Clause 1. A system for execution of interdependent decision-making subtasks by a plurality of AI agents, comprising:
   a processor;
   a non-transitory storage device containing instructions that, when executed by the processor, cause the processor to:
      receive, from an end-point device over a network, a task comprising a task context, wherein the task context comprises at least a decision objective and associated data references;
      generate an execution graph for the task, wherein the execution graph defines a plurality of subtasks and inter-subtask dependencies;
      instantiate the plurality of AI agents, wherein each AI agent is configured to execute at least one subtask of the plurality of subtasks, wherein instantiating further comprises:
         dynamically generating a scoped task context corresponding to the at least one subtask; and
         authorizing access relevant data references based on a scoped task context; execute, using the plurality of AI agents, the plurality of subtasks, thereby
   generating a plurality of subtask outputs;
      determine, for each subtask output, a corresponding target location within a structured output template associated with the decision objective, based on at least one of semantic identifiers associated with the scoped task context, positional metadata generated during execution of the subtask, and inter-subtask dependencies; and
      generate a final decision artifact by inserting each subtask output into its corresponding target location within the structured output template.
Clause 2. The system of Clause 1, wherein the task context further comprises execution constraints, wherein the execution constraints comprise at least one of data access restrictions, subject matter expert (SME) validation requirements, jurisdiction-specific processing rules, or temporal deadlines associated with the decision objective.
Clause 3. The system of Clause 1, wherein, the instructions, when executed, further cause the processor to:
   validate a completeness of the decision objective and the associated data references; and
   generate a task identifier linked to the execution graph, scoped task contexts, and agent outputs for traceability across a lifecycle of the task.
Clause 4. The system of Clause 1, wherein, in generating the execution graph, the instructions, when executed, further cause the processor to:
   identify dependency conditions among subtasks based on at least one of shared data references, a required ordering of operations, or contextual constrains specified in the task context.
Clause 5. The system of Clause 1, wherein each subtask is associated with metadata comprising at least one of required input types, expected output format, or fallback behavior upon failure or non-availability of a downstream AI agent.
Clause 6. The system of Clause 1, wherein, in generating the execution graph, the instructions, when executed, further cause the processor to:
   associate each subtask with an AI agent role selected from a predefined registry of AI agent types based on at least the scoped task context corresponding to the at least one subtask.
Clause 7. The system of Clause 1, wherein the execution graph is dynamically modifiable during runtime in response to at least one of output quality metrics received from an AI agent, SME input indicating a correction or clarification, or detection of unresolved dependencies during task progression.
Clause 8. The system of Clause 1, wherein, in dynamically generating the scoped task context, the instructions, when executed, further cause the processor to:
   extract, from the task context, data references, execution constraints, and semantic directives relevant to the at least one subtask and its associated downstream dependencies.
Clause 9. The system of Clause 1, wherein each AI agent is instantiated as a logical node within a distributed execution environment and provisioned with an agent-specific instruction set, a memory buffer for context retention, and access tokens scoped to data references identified in the scoped task context.
Clause 10. The system of Clause 1, wherein authorizing access to data references comprises enforcing fine-grained access policies using an attribute-based access control (ABAC) model based on subtask identity, agent role, and sensitivity classification of the data.
Clause 11. The system of Clause 1, wherein, in instantiating the plurality of AI agents, the instructions, when executed by the processor, further causes the processor to:
   select an AI agent type from a configurable registry of AI agent templates, wherein each AI agent template comprises a functional role definition, a tool and model access configurations, and validation protocols for subtask outputs.
Clause 12. The system of Clause 1, wherein the plurality of AI agents is instantiated in parallel constrained by the inter-subtask dependencies.
Clause 13. The system of Clause 1, wherein the instructions, when executed by the processor, further causes the processor to:
   coordinate, via an inter-AI agent messaging layer, the plurality of AI agents to exchange intermediate outputs, control signals, and task state updates.
Clause 14. The system of Clause 1, wherein in determining the corresponding target location, the instructions, when executed, further cause the processor to:
   resolve a mapping between the subtask output and a multi-dimensional data coordinate defined by the structured output template, wherein the mapping is computed based on a semantic role associated with the subtask and a hierarchical structure of the output template.
Clause 15. The system of Clause 1, wherein the structured output template comprises a machine-readable schema defining field-level constraints, and wherein the instructions, when executed, further cause the processor to:
   validate data type compatibility between each subtask output and corresponding target location; and
   enforce ordering rules among interdependent fields.
Clause 16. The system of Clause 1, wherein, in generating the final decision artifact, the instructions, when executed, further cause the processor to:
   determine that all required fields defined by the structured output template have been populated and all inter-field dependency constraints have been satisfied prior to finalization.
Clause 17. The system of Clause 1, wherein the instructions, when executed, further cause the processor to:
   transmit the final decision artifact to an SME device for validation; and
   transmit the final decision artifact to the end-point device or to one or more external systems for downstream consumption.
Clause 18. The system of Clause 1, wherein, in executing the plurality of subtasks using the plurality of AI agents, the instructions, when executed, further cause the processor to:
   invoke a machine learning model conditioned on the scoped task context and one or more retrieved data values, wherein the machine learning model is configured to generate a structured output conforming to a subtask-specific output specification.
Clause 19. The system of Clause 1, wherein, in executing the plurality of subtasks using the plurality of AI agents, the instructions, when executed, further cause the processor to:
   invoke a chain-of-thought reasoning protocol comprising multiple sequential inference steps, each conditioned on the output of a prior step and on AI agent memory state.
Clause 20. The system of Clause 1, wherein, in executing the plurality of subtasks using the plurality of AI agents, the instructions, when executed, further cause the processor to:
   validate input completeness prior to execution by resolving unresolved data references in the scoped task context, and confirming satisfaction of dependency conditions associated with upstream subtasks.
Clause 21. A method for execution of interdependent decision-making subtasks by a plurality of AI agents, comprising:
   receiving, from an end-point device over a network, a task comprising a task context, wherein the task context comprises at least a decision objective and associated data references;
   generating an execution graph for the task, wherein the execution graph defines a plurality of subtasks and inter-subtask dependencies;
   instantiating a plurality of AI agents, wherein each AI agent is configured to execute at least one subtask of the plurality of subtasks, wherein instantiating further comprises:
      dynamically generating a scoped task context corresponding to the at least one subtask; and
      authorizing access relevant data references based on a scoped task context;
   executing, using the plurality of AI agents, the plurality of subtasks, thereby generating a plurality of subtask outputs;
   determining, for each subtask output, a corresponding target location within a structured output template associated with the decision objective, based on at least one of semantic identifiers associated with the scoped task context, positional metadata generated during execution of the subtask, and inter-subtask dependencies; and
   generating a final decision artifact by inserting each subtask output into its corresponding target location within the structured output template.
Clause 22. A computer program product for execution of interdependent decision-making subtasks by a plurality of AI agents, the computer program product comprising a non-transitory computer-readable medium comprising code, which when executed, causes a processor to:
   receive, from an end-point device over a network, a task comprising a task context, wherein the task context comprises at least a decision objective and associated data references;
   generate an execution graph for the task, wherein the execution graph defines a plurality of subtasks and inter-subtask dependencies;
   instantiate a plurality of AI agents, wherein each AI agent is configured to execute at least one subtask of the plurality of subtasks, wherein instantiating further comprises:
      dynamically generating a scoped task context corresponding to the at least one subtask; and
      authorizing access relevant data references based on a scoped task context;
   execute, using the plurality of AI agents, the plurality of subtasks, thereby generating a plurality of subtask outputs;
   determine, for each subtask output, a corresponding target location within a structured output template associated with the decision objective, based on at least one of semantic identifiers associated with the scoped task context, positional metadata generated during execution of the subtask, and inter-subtask dependencies; and
   generate a final decision artifact by inserting each subtask output into its corresponding target location within the structured output template.

## Claims

1. A system for execution of interdependent decision-making subtasks by a plurality of AI agents, comprising:
a processor;
a non-transitory storage device containing instructions that, when executed by the processor, cause the processor to:
receive, from an end-point device over a network, a task comprising a task context, wherein the task context comprises at least a decision objective and associated data references;
generate an execution graph for the task, wherein the execution graph defines a plurality of subtasks and inter-subtask dependencies;
instantiate the plurality of AI agents, wherein each AI agent is configured to execute at least one subtask of the plurality of subtasks, wherein instantiating further comprises:
dynamically generating a scoped task context corresponding to the at least one subtask; and
authorizing access relevant data references based on a scoped task context;
execute, using the plurality of AI agents, the plurality of subtasks, thereby generating a plurality of subtask outputs;
determine, for each subtask output, a corresponding target location within a structured output template associated with the decision objective, based on at least one of semantic identifiers associated with the scoped task context, positional metadata generated during execution of the subtask, and inter-subtask dependencies; and
generate a final decision artifact by inserting each subtask output into its corresponding target location within the structured output template.

2. The system of Claim 1, wherein the task context further comprises execution constraints, wherein the execution constraints comprise at least one of data access restrictions, subject matter expert (SME) validation requirements, jurisdiction-specific processing rules, or temporal deadlines associated with the decision objective.

3. The system of Claim 1 or Claim 2, wherein, the instructions, when executed, further cause the processor to:
validate a completeness of the decision objective and the associated data references; and
generate a task identifier linked to the execution graph, scoped task contexts, and agent outputs for traceability across a lifecycle of the task.

4. The system of any preceding Claim, wherein, in generating the execution graph, the instructions, when executed, further cause the processor to:
identify dependency conditions among subtasks based on at least one of shared data references, a required ordering of operations, or contextual constrains specified in the task context.

5. The system of any preceding Claim, wherein each subtask is associated with metadata comprising at least one of required input types, expected output format, or fallback behavior upon failure or non-availability of a downstream AI agent.

6. The system of any preceding Claim, wherein, in generating the execution graph, the instructions, when executed, further cause the processor to:
associate each subtask with an AI agent role selected from a predefined registry of AI agent types based on at least the scoped task context corresponding to the at least one subtask.

7. The system of any preceding Claim, wherein the execution graph is dynamically modifiable during runtime in response to at least one of output quality metrics received from an AI agent, SME input indicating a correction or clarification, or detection of unresolved dependencies during task progression.

8. The system of any preceding Claim, wherein, in dynamically generating the scoped task context, the instructions, when executed, further cause the processor to:
extract, from the task context, data references, execution constraints, and semantic directives relevant to the at least one subtask and its associated downstream dependencies.

9. The system of any preceding Claim, wherein each AI agent is instantiated as a logical node within a distributed execution environment and provisioned with an agent-specific instruction set, a memory buffer for context retention, and access tokens scoped to data references identified in the scoped task context.

10. The system of any preceding Claim, wherein authorizing access to data references comprises enforcing fine-grained access policies using an attribute-based access control (ABAC) model based on subtask identity, agent role, and sensitivity classification of the data.

11. The system of any preceding Claim, wherein, in instantiating the plurality of AI agents, the instructions, when executed by the processor, further causes the processor to:
select an AI agent type from a configurable registry of AI agent templates, wherein each AI agent template comprises a functional role definition, a tool and model access configurations, and validation protocols for subtask outputs.

12. The system of any preceding Claim, wherein the plurality of AI agents is instantiated in parallel constrained by the inter-subtask dependencies.

13. The system of any preceding Claim, wherein the instructions, when executed by the processor, further causes the processor to:
coordinate, via an inter-AI agent messaging layer, the plurality of AI agents to exchange intermediate outputs, control signals, and task state updates.

14. A method for execution of interdependent decision-making subtasks by a plurality of AI agents, comprising:
receiving, from an end-point device over a network, a task comprising a task context, wherein the task context comprises at least a decision objective and associated data references;
generating an execution graph for the task, wherein the execution graph defines a plurality of subtasks and inter-subtask dependencies;
instantiating a plurality of AI agents, wherein each AI agent is configured to execute at least one subtask of the plurality of subtasks, wherein instantiating further comprises:
dynamically generating a scoped task context corresponding to the at least one subtask; and
authorizing access relevant data references based on a scoped task context;
executing, using the plurality of AI agents, the plurality of subtasks, thereby generating a plurality of subtask outputs;
determining, for each subtask output, a corresponding target location within a structured output template associated with the decision objective, based on at least one of semantic identifiers associated with the scoped task context, positional metadata generated during execution of the subtask, and inter-subtask dependencies; and
generating a final decision artifact by inserting each subtask output into its corresponding target location within the structured output template.

15. A computer program product for execution of interdependent decision-making subtasks by a plurality of AI agents, the computer program product comprising a non-transitory computer-readable medium comprising code, which when executed, causes a processor to:
receive, from an end-point device over a network, a task comprising a task context, wherein the task context comprises at least a decision objective and associated data references;
generate an execution graph for the task, wherein the execution graph defines a plurality of subtasks and inter-subtask dependencies;
instantiate a plurality of AI agents, wherein each AI agent is configured to execute at least one subtask of the plurality of subtasks, wherein instantiating further comprises:
dynamically generating a scoped task context corresponding to the at least one subtask; and
authorizing access relevant data references based on a scoped task context;
execute, using the plurality of AI agents, the plurality of subtasks, thereby generating a plurality of subtask outputs;
determine, for each subtask output, a corresponding target location within a structured output template associated with the decision objective, based on at least one of semantic identifiers associated with the scoped task context, positional metadata generated during execution of the subtask, and inter-subtask dependencies; and
generate a final decision artifact by inserting each subtask output into its corresponding target location within the structured output template.
